# EUROPÄISCHE PATENTSCHRIFT

(11) **EP 1 173 749 B1**
(45) Veröffentlichungstag und Bekanntmachung des Hinweises auf die Patenterteilung: **28.09.2005**
(21) Anmeldenummer: 00940134.0
(22) Anmeldetag: 19.04.2000
(51) Int. Cl.: G01N 21/88, G01N 21/95, G01B 11/24

(54) **BILDBEARBEITUNG ZUR VORBEREITUNG EINER TEXTURANALYSE**
IMAGE EDITING FOR PREPARING A TEXTURE ANALYSIS
TRAITEMENT D'IMAGE POUR PREPARER L'ANALYSE D'UNE TEXTURE

(30) Priorität: 19.04.1999 DE 19917619
(43) Veröffentlichungstag der Anmeldung: 23.01.2002
(73) Patentinhaber: Fraunhofer-Gesellschaft zur Förderung der angewandten Forschung e.V., 80686 München (DE)
(72) Erfinder: LANG, Peter, D-91080 Spardorf (DE); SPINNLER, Klaus, D-91056 Erlangen (DE); SCHRAMM, Ullrich, D-91336 Heroldsbach (DE); BAUER, Norbert, D-91058 Erlangen (DE)
(74) Vertreter: Leonhard, Frank Reimund
(86) Internationale Anmeldenummer: PCT/DE2000/001228
(87) Internationale Veröffentlichungsnummer: WO 2000/063681

(56) Entgegenhaltungen:
- EP-A- 0 456 126
- EP-A- 0 813 336
- WO-A-98/44315
- DE-A- 4 313 258
- DE-A- 19 739 250
- JP-A- 1 277 743
- JP-A- 10 300 446
- US-A- 4 825 297
- US-A- 5 185 812
- US-A- 5 379 347
- US-A- 5 438 525
- US-A- 5 594 767
- US-A- 5 805 721
- US-A- 6 055 340

## Beschreibung

Im Gebiet der industriellen Qualitätssicherung sind optische Prüfmethoden wichtige und bewährte Verfahren zur Sicherstellung einer gleichbleibenden Qualität im Produktionsprozess. Durch den ständig steigenden Kosten- und Konkurrenzdruck entsteht die Notwendigkeit, Verfahren zur Qualitätskontrolle zu automatisieren. Ermöglicht und begünstigt wird dies einerseits durch die zunehmende Verfügbarkeit von problemspezifischen Sensorkomponenten und andererseits durch eine überproportional wachsende Rechenleistung, womit auch Standardrechner anspruchsvolle Prüfaufgaben bewältigen können.

Automatisierte Bildverarbeitungssysteme lassen sich so einsetzen, dass Produktionsprozesse lückenlos überwacht und fehlerhafte Teile frühzeitig aus der Produktionslinie entfernt werden können. Damit werden die Kosten für die Weiterverarbeitung defekter Teile, wie es bei einer reinen Endkontrolle der Fall wäre, eingespart. Außerdem gewährleisten maschinelle Prüfsysteme Objektivität im Gegensatz zur subjektiven Beurteilung durch Prüfpersonal. Mit weiter sinkenden Kosten für Hard- und Software amortisieren sich automatische Prüfsysteme in kurzer Zeit. Während in der Vergangenheit Systeme zur Prüfung von flachen Werkstücken und ebenen Oberflächen zur industriellen Reife entwickelt wurden, ist die Prüfung von dreidimensionalen Formen und Freiformflächen noch Gegenstand aktueller Forschung.

"Freiformflächen" (Oberflächen mit beliebigen Krümmungsradien und Ausrichtungen) können mit bisherigen Verfahren nur unter stark eingeschränkten Randbedingungen geprüft werden: Ein wesentlicher Aspekt bei der Bildaufnahme ist hierbei, dass die Oberfläche aufgrund der Krümmung oder durch Verkippung gegenüber der optischen Achse der Sensoranordnung in verschiedenen Skalierungen auf den Bilddaten der optischen Sensoranordnung abgebildet wird. Damit sind existierende Auswerteverfahren für ebene Flächen nicht unmittelbar anwendbar. Zusätzlich bedingt die räumliche Ausprägung und die unterschiedliche Oberflächenbeschaffenheiten derartiger Werkstücke als Objekte Beleuchtungs-Effekte (z.B. Glanzstellen, kontrastarme Bereiche, diffuse Reflexion, ... ), die nachträglich korrigiert werden müssen, um eine quantitative Vergleichbarkeit der zu prüfenden Flächenstücke zu ermöglichen.

Bisher bekannte Verfahren können diese Anforderungen nicht vollständig erfüllen.

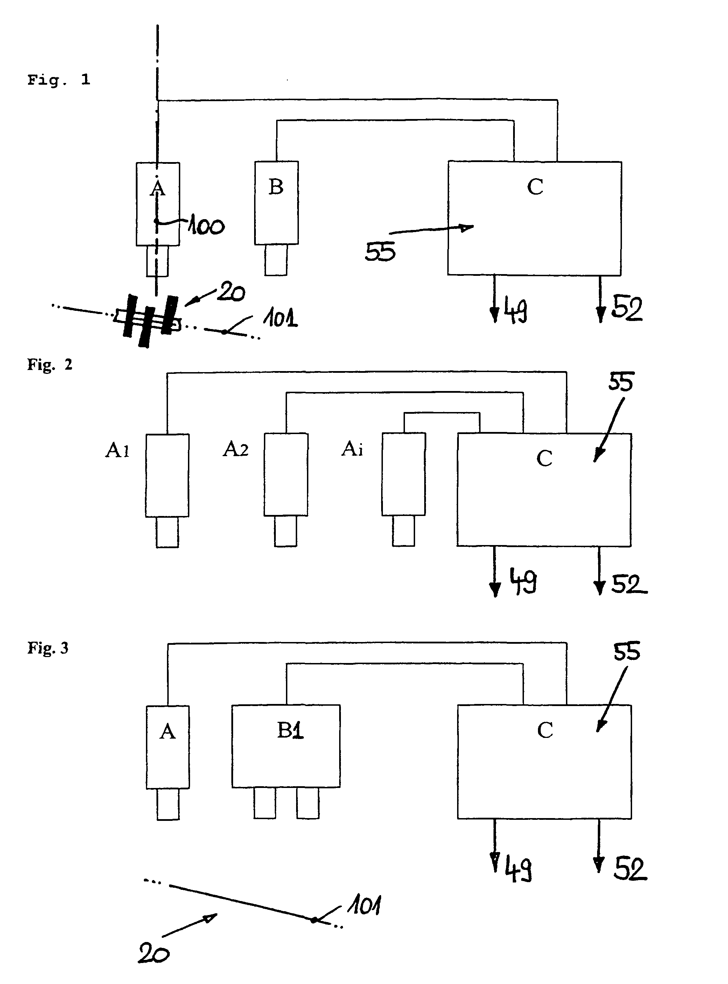

Aus **DE-A-197 39 250** (Fraunhofer), dort Figur 1, oder **EP-A 1 001 249** (New. Creation), dort Abstract, alternativ **DE-A 43 13 258** (Beiersdorf), dort Figur 1 und zugehörige Beschreibung, wieder alternativ aus **EP-A 456 126** (Robert Massen), dort Abstract, sind nicht zur optischen Achse senkrecht ausgerichtete Oberflächen dem Fachmann zugänglich, die er zur erfassen wünscht, wobei die Oberfläche Teil eines zu prüfenden Gegenstandes (Prüfobjekt oder nur "Objekt") ist. In der zuerst genannten Schrift wird eine berührungslose und zerstörungsfreie Prüfung von nicht senkrecht zu der Achse ausgerichteten Oberflächen vorgeschlagen, wobei die Sensoranordnung photometrische Informationen in einer oder mehreren Oberflächen auswertet, vgl. dort insbesondere Spalte 1, Zeilen 3 bis 36, Spalte 3, Zeile 49 bis Spalte 4, Zeile 18, schließlich Spalte 4, Zeile 63 bis Spalte 5, Zeile 47 sowie die dortigen Figuren 1 bis 3c, maßgebend die dortige Figur 3b. In der optischen Bildverarbeitung sind weiterhin Auswerteverfahren für ebene Flächen bekannt, und Hilfsmittel, um diese Auswerteverfahren operativ einzusetzen, vgl. beispielsweise **US-A 4,825,297** (Fuchsberger), insbesondere dortige Spalte 5, Zeile 15 bis Spalte 6, letzter Absatz zu Hilfsfunktionen der Filterung, der Rasterung, der Kontrastbeeinflussung und der Verwendung eines Verstärkungsfaktors. Die Einstellung einer Grundhelligkeit über ein Arbeitsbild ist der **EP-A 813** 336 (Fuji Photo Film) zu entnehmen, wie auch der vorgenannten **US-A 4,825,297.**

**Aufgabe der Erfindung ist es**, Bilddaten von nicht senkrecht zur optischen Achse ausgerichteten Flächenstücken (i.F. auch "Oberflächen") so zu bearbeiten und so aufzubereiten, dass eine sich anschließende automatisierte quantitative Vergleichbarkeit möglich wird. Vorgeschlagen wird dazu ein Verfahren zur Vorbereitung einer automatischen visuellen Prüfung von Freiformflächen, d.h. Flächen unterschiedlicher räumlicher Orientierung und Krümmung. Die Datenaufnahme erfolgt hierbei mit zumindest einer Sensor-Anordnung, die photometrische Information (Grauwert-/Farbbild) und korrespondierende Tiefeninformation (3D-Datensätze) als Bilddaten liefert (Anspruch 1,5).

Es werden mehrere Verfahrensschritte angewendet zur Auswahl der interessierenden Bildbereiche (Regionen-Segmentierung), Rückführung der Freiformflächen in Ebenen (geometrische Entzerrung, parametrisch und parametrisierungsfrei), Korrektur von Beleuchtungseinflüssen (Beleuchtungskompensation bzgl. Helligkeit und Kontrast) und Bewertung der hinsichtlich Geometrie und Beleuchtung korrigierten Flächen mit Verfahren der Texturanalyse, vgl. Ansprüche 14, 17, 7 (und 8) bzw. 16 - in dieser Reihenfolge.

Das Prüfsystem kann eine oder mehrere Positioniereinheiten (z.B. ein Roboter oder eine Handhabungseinrichtung) beinhalten, auf welche optische Sensoren montiert werden, um verschiedene Ansichten des zu prüfenden Objekts, insbesondere Werkstücks zu erhalten. Alternativ oder zusätzlich kann das Prüfobjekt selbst durch derartige Einheiten bewegt werden, um zusätzliche Freiheitsgrade bzgl. der Positionierung zu erreichen, vgl. **DE-A 197 39 250 (Fraunhofer)**. Im Ergebnis ergeben sich mehrere Relativpositionen (in Lage, Richtung und/oder räumlicher Anordnung) von Prüfobjekt und Sensoranordnung (Anspruch 2, 3 und 4).

Eine weitere, gesondert hervorzuhebende Komponente des Verfahrens ist die Kompensation der Beleuchtungseffekte, bestehend aus einer Angleichung der Hintergrundbeleuchtung und einer Kontrastanpassung, ohne die mit der Prüfung zu ermittelnden Fehlstellen auf den Bilddaten der untersuchten Oberflächen zu verfälschen (Anspruch 21, 27, 24).

Zu einer Kantenfindung werden aus einer Tiefenkarte zunächst die Normalenvektoren berechnet. Damit lassen sich den einzelnen Pixel der Bildmatrix die entsprechenden Normalenvektoren zuordnen. Anschließend wird die Verkippung benachbarter Normalenvektoren bestimmt. Das Kantenbild selbst erhält man durch Binarisierung der Verkippungsgrößen für jedes Pixel an Hand eines applikationsspezifisch zu wählenden Schwellenwertes.

Außerdem kann eine Randbedingung zu berücksichtigen sein, die von der Kompensation der Hintergrundbeleuchtung im Intensitätsbild herrührt. Durch die dort angewendete Tiefpassfilterung verkleinert sich der auswertbare Bildbereich entsprechend der Größe des Filterkernels. Daher kann zusätzlich zur Binarisierung des Kantenbildes ein Rand um das gesamte Bild in der "Farbe" der Kanten gezogen werden.

Die Kontrastveränderung in einem Rasterbereich (Anspruch 27) erfolgt nicht zwingend immer, sondern kann von einer Bedingung abhängig gemacht werden. Eine geeignete Bedingung wäre der Vergleich des berechneten Veränderungsfaktors mit einer Konstanten, die im Bereich von Eins liegen kann (Anspruch 30). Mit einer solchen Schwellenwertentscheidung verhindert man, dass Oberflächendefekte, die im Intensitätsbild mit großem Kontrast erscheinen, fälschlicherweise an fehlerfreie Rasterbereiche angeglichen werden. Man geht dabei davon aus, dass sehr helle oder sehr dunkle Rasterbereiche potentielle Fehler sind oder enthalten, so dass vermieden werden sollte, solche Rasterbereiche im Kontrast auf eine Weise zu verändern, die ihre spätere Erkennung erschweren würde. Der beschriebene Vergleichswert, mit dem der Veränderungsfaktor eines jeweiligen Rasterbereiches verglichen wird, kann empirisch oder experimentell festgelegt werden. Versuche haben gezeigt, dass er günstig bei Eins liegt. Damit ist selbstverständlich ein Bereich um Eins gemeint, also im Wesentlichen Eins, nicht genau Eins.

Es empfiehlt sich, die Größe der Rasterbereiche, auch "Fensterbereiche" genannt, so zu wählen, dass sie erheblich kleiner als der von ihnen gerasterte Flächenbereich, aber doch größer als der größte zu erwartende Oberflächendefekt (Fehlstelle) des zu prüfenden Objekts, bzw. in der Oberfläche des zu prüfenden Objektes ist. Es kann dann nicht vorkommen, dass eine Fehlerstelle einen Rasterbereich vollständig einnimmt und eine Kontrastdifferenz entsteht, die für diesen Flächenbereich Null ist. Der für die Bestimmung eines jeweils für einen Rasterbereich geltenden Verstärkungsfaktors herangezogene Vergleichswert aus zwei Referenzparametem kann aus einem garantiert fehlerfreien Bildbereich oder anhand eines nicht mit Fehlstellen belegten "Gutteiles" ermittelt und als Vorwissen vorgegeben werden. Die Vorgabe zumindest einer Region in den photometrischen Bilddaten erfolgt gesteuert von den geometrischen Daten, respektive dem Tiefenbild, aus dem die Regionen durch Operationen wie Interpolation, Kantenfilterung, Konturpunktverkettung und ggf. Maskierung ermittelt werden.

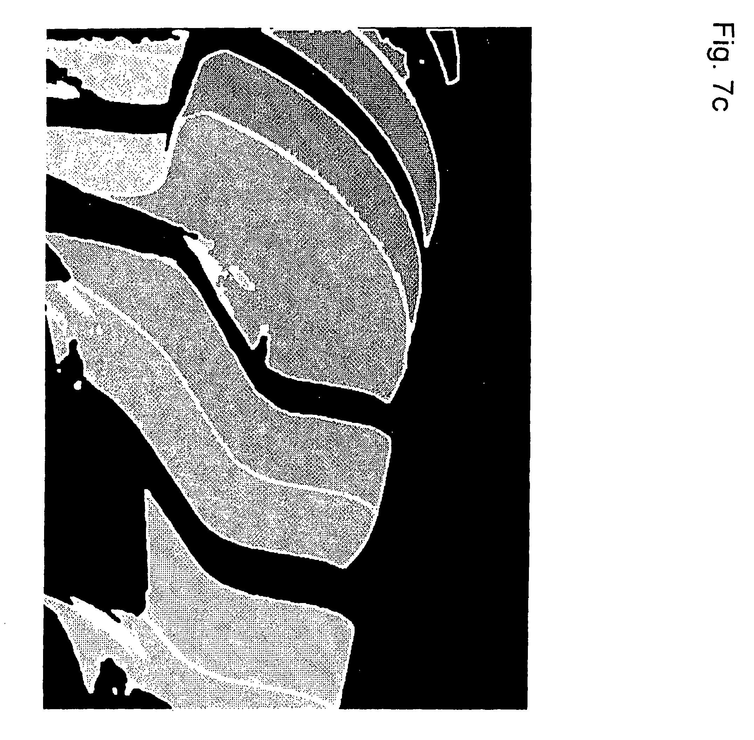

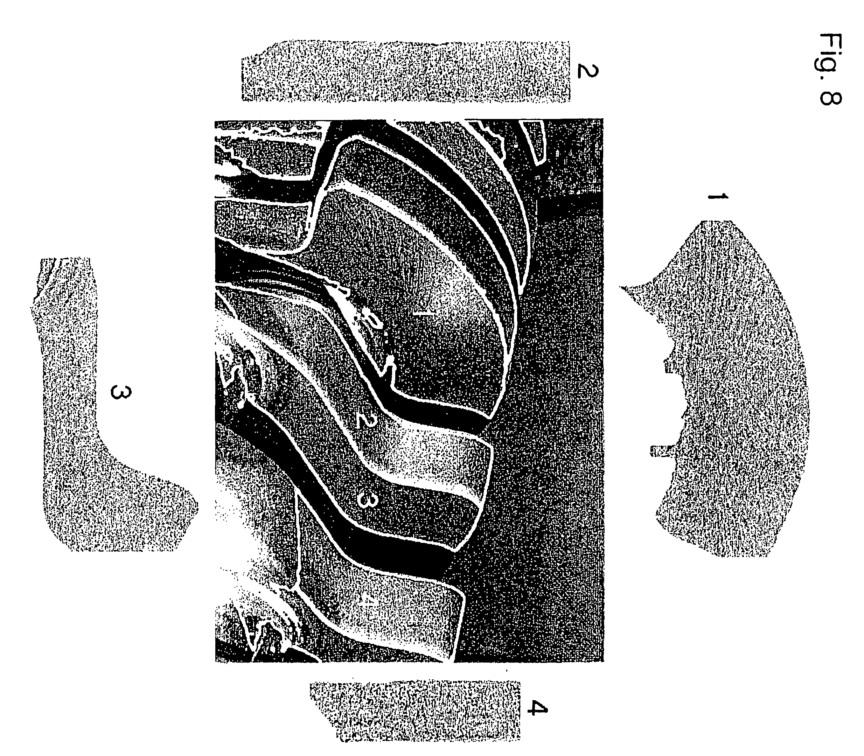

Die am Ende der Verarbeitung stehende geometrische Entzerrung zur Darstellung der nicht ausgerichteten Oberfläche in einer zweidimensionalen Darstellung arbeitet mit drei Eingängen. Ein Eingang stellt Steuerinformationen zur Herstellung eines an die räumliche Lage oder Form der Fläche angepassten Gitternetzes, insbesondere eines krümmungsadaptiven Gitternetzes bereit, welche Adaption über eine geglättete geometrische Information erfolgt, für eine makroskopische Betrachtungsweise des Werkstücks, hier des geometrisch zu entzerrenden Oberflächenstücks. Eine weitere Eingangsgröße ist die maskierte GeometrieInformation zur Bereitstellung desjenigen nicht ausgerichteten (gekrümmten oder schräg zur Achse liegenden) Oberflächenstücks. Die dritte Eingangsgröße liegt in der Bereitstellung der photometrischen Informationen, also der Helligkeitsinformation dieses Oberflächenstücks. Alle drei Eingänge bilden zusammen die Grundlage für eine Darstellung des interessanten Oberflächenstücks in der für eine Prüfung und Bewertung geeigneten Weise, vgl. hierzu die Oberflächenstücke 1,2,3 und 4 aus **Figur 8**, jeweils randseits des zentralen Bildes, die plane (ebene) Darstellung der räumlich nicht ausgerichteten, gleichnamigen Oberflächenstücke in dem zentralen Bild der Figur 8 sind. In diesem Beispiel ist eine schräg zur Achse liegende Fläche das Flächenstück 1 und eine räumlich gekrümmt verlaufende Fläche das Flächenstück 2 oder 4. Alle diese Flächenstücke werden auf einer Ebene abgebildet, unter Beseitigung von Kontrast- und Helligkeitsstörungen, die im zentralen Bild der Figur 8 noch ohne weiteres ersichtlich sind, aber in den randseitig dargestellten Ausschnitten nicht mehr als störend zu erkennen sind.

Die Kompensation von Beleuchtungseffekten (Anspruch 24) wird hinsichtlich der Angleichung der Hintergrundbeleuchtung (Shading-Korrektur oder Helligkeitsentzerrung) in der Regel über das gesamte Bild gleichmäßig erfolgen. Eine Kontrastanpassung erfolgt dagegen Bildpunkt für Bildpunkt, wobei in einer üblichen Vorgehensweise für jeden Bildpunkt ein unterschiedlicher Koeffizient für eine Steigungsänderung und der über die Fläche gleiche Parameter für eine Parallelverschiebung des Helligkeitswertes an diesem Bildpunkt vorliegt, ggf. auch nur eine unterschiedliche Steigung für jedes Pixel. Dieser Faktor ist für jeden Bildpunkt bei bekannten Kontrastentzerrungen unterschiedlich. Gemäß Anspruch 27 aber erfolgt die Kontrastanpassung nicht mit einem unterschiedlichen Koeffizient für jeden Bildpunkt, sondern es werden Rasterbereiche gebildet, deren Erstreckung größer ist als ein Bildpunkt und für die im Rasterbereich liegenden mehreren, meist eine Vielzahl von Bildpunkten wird ein fester Koeffizient bestimmt, der als Proportionalitätsfaktor für alle Helligkeitswerte der Bildpunkte in diesem Bereich herangezogen wird. Für den nächsten, einen benachbarten, folgenden oder daneben liegenden, gleich großen Rasterbereich wird ein anderer Koeffizient bestimmt, der von all denjenigen Bildpunkten mitbestimmt wird, die sich in diesem Rasterbereich befinden (Anspruch 28). Auch hier erfolgt die Veränderung durch eine Multiplikation (Anspruch 29), aber eigenständig für eine ganze Gruppe von Bildpunkten im Rasterbereich (Anspruch 31). Die Kontrastanpassung erfolgt demgemäß bereichsweise mit konstanten Koeffizienten, wobei der Bereich ein Rasterbereich ist und jeder Rasterbereich im Rahmen eines aktuell hinsichtlich ihres Kontrastes beeinflussten Oberflächenstücks eine gleiche Größe besitzt, nur nicht in den Randabschnitten, wo aufgrund einer nicht gerade verlaufenden Begrenzung des bereichsweise im Kontrast beeinflussten Oberflächenstücks (hier einer Region) Rasterbereiche entstehen, deren Erstreckung (Fläche) kleiner ist. Diese Randabschnitte können aber ebenso bearbeitet werden wie die übrigen, gleich großen Rasterbereiche.

Es sollte angemerkt werden, dass die Rasterbereiche auf dem planen Abbild (den Bilddaten bzw. der photometrischen Information) eine gleiche Größe besitzen; bei einer schräg zur Achse oder gekrümmt zur Achse der Sensoranordnung verlaufenden Region aber diese Rasterbereiche auf dem tatsächlichen Prüfobjekt nicht zwingend ein gleiches Flächenstück hinsichtlich des dortigen Oberflächensegmentes festlegen, das in den Rasterbereich abgebildet wird bzw. darin abgebildet ist.

Ausführungs**beispiele** und Funktionsüberlegungen ergänzen und erläutern die Erfindung.
**Figur 1** veranschaulicht einen optoelektronischen Sensor A und eine Beleuchtungseinrichtung B, wobei der Sensor A photometrische Informationen, d.h. Grauwert- oder Farbbilder eines Prüfobjektes 20 erzeugt. Eine optische Achse 100 des Sensors A ist vorgegeben.
**Figur 2** veranschaulicht zwei oder mehr optische Sensoren A₁, A₂, Aᵢ mit einer gegebenen räumlichen Anordnung zur Gewinnung der photometrischen Information.
**Figur 3** veranschaulicht einen optischen Sensor A und ein scannendes, laser-basiertes 3D-Meßsystem B, deren Bilddaten zu einer Datenaufnahme C (auch 55) übertragen werden.

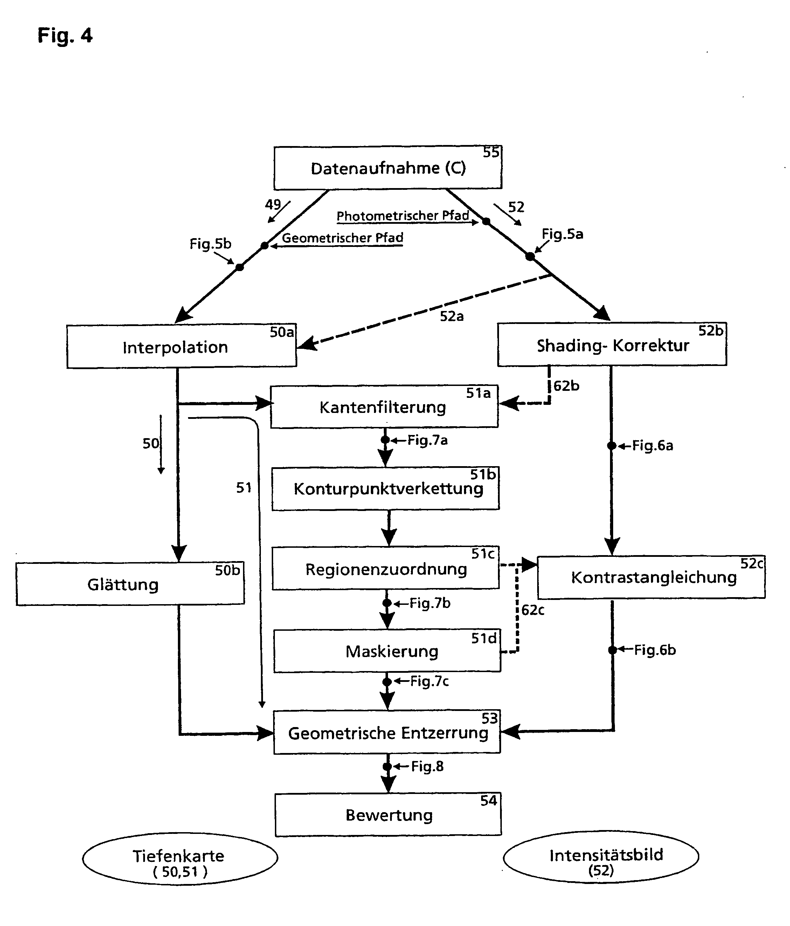

**Figur 4** veranschaulicht ein Blockschaltbild mit einer Vielzahl von Funktionen, die in einzelne Äste 49,50,51,52 aufgeteilt sind und in diesen jeweiligen Ästen Funktionsblöcke benennen, die im einzelnen erläutert werden. Die Datenaufnahme 55 wird mit den Sensoranordnungen gemäß den Figuren 1, 2 oder 3 bewerkstelligt und entspricht C von Figur 3. Die Bewertung 54 ist beispielsweise ein Texturverfahren zur Analyse der Oberfläche und die geometrische Entzerrung 53 soll besonders hervorgehoben werden. Mit ihr werden Bilddaten zur Verfügung gestellt, die schwierig zu messende Oberflächen von Werkstücken so darstellen, daß die Bewertung 54 mit einfachen 2D-Verfahren erfolgen kann.
**Figur 5a** veranschaulicht ein Werkstück 20, hier eine Kurbelwelle, die eine Vielzahl von Oberflächenstücken 1,2,3,4,1*,3* aufweist, die in einer schrägen Stellung bezogen auf die optische Achse 100 des abbildenden Sensors zu liegen kommen, gleichzeitig sind starke Helligkeits- und Kontrastunterschiede zu erkennen.
**Figur 5b** veranschaulicht eine Tiefenkarte von der Kurbelwelle 20.
**Figur 6** veranschaulicht herausgegriffen aus Figur 8 und dort hinsichtlich des Flächenbereichs 3 mit einem Raster 21 versehen, einzelne Fensterabschnitte, die mit 30, 31 und 33 im Beispiel bezeichnet sind.
**Figur 6a** ist die Kurbelwelle nach einer Shading-Korrektur 52b, wodurch eine Helligkeitskorrektur durchgeführt wird.
**Figur 6b** ist die Kurbelwelle nach einer Kontrastangleichung 52c, folgend auf die Helligkeitskorrektur von Figur 6a.
**Figur 7a** veranschaulicht eine Normalenvektor-Darstellung (mehrfarbig, hier nur schwarz/weiß dargestellt), bei der jedem Pixel ein Normalenvektor zugeordnet ist.
**Figur 7b** veranschaulicht die Kurbelwelle 20 von Figur 5a mit Regionensegmentierung.
**Figur 8** veranschaulicht entzerrte Regionen 1,2,3,4, die auch gesondert neben dem Bild dargestellt werden, bezogen auf die Kurbelwelle 20. Das Flächenstück 3 (am unteren Bildrand der Figur) ist in der Figur 6 gesondert herausgestellt. Die nicht sichtbaren Regionen 1* und 3* auf der Rückseite der Regionen 1,3 entsprechen der Lage in Figur 5a.

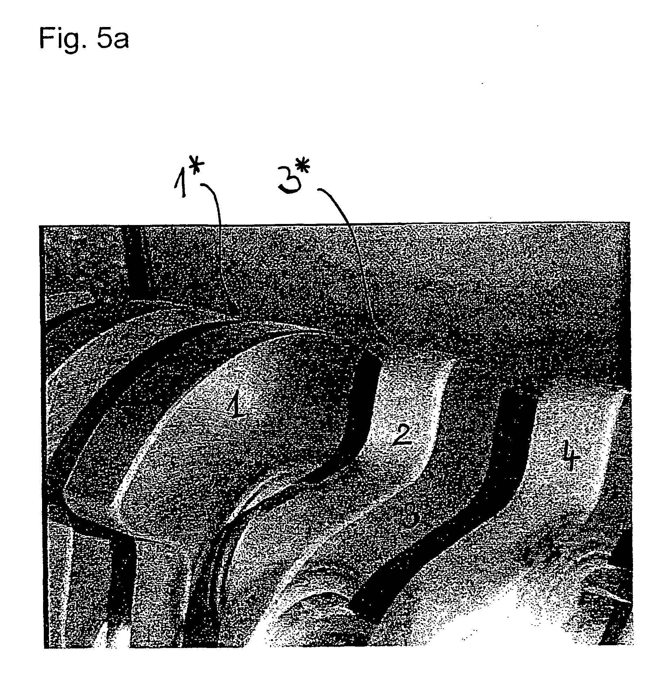

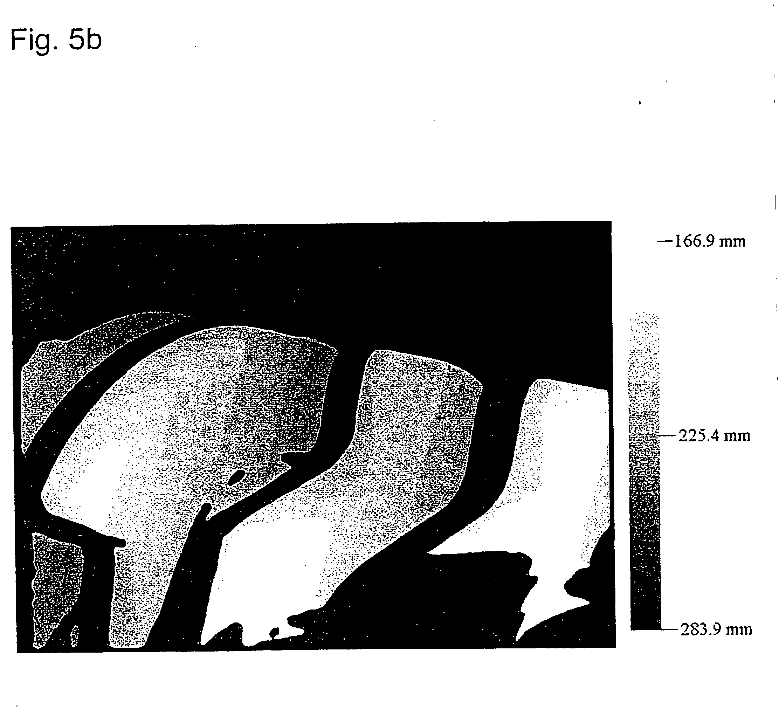

Das Gesamtverfahren zur Prüfung eines Werkstücks ist in **Figur 4** schematisch dargestellt. Ausgangspunkt sind durch eine optische Sensoranordnung von **Figuren 1 bis 3** gewonnene Intensitäts- und Tiefenbilder aus der Datenaufnahme 55. Beispiele solcher Bilddaten sind in **Figur 5a bzw. 5b** gezeigt. Einerseits werden die Tiefendaten im Pfad 50 bei 50b geglättet, um eine makroskopische Betrachtungsweise der Werkstückoberflächen zu erhalten, andererseits dient die Tiefenkarte im Pfad 51 der Extraktion und Zuordnung 51c,51d von abgeschlossenen Flächenstücken nach vorheriger Filterung 51a,51b von (dreidimensional ausgeprägten) Kanten. Parallel dazu wird das korrespondierende Intensitätsbild im Pfad 52 bezüglich der Beleuchtung bei 52b,52c korrigiert. Anschließend erfolgt die regionenbezogene Entzerrung 53 und Bewertung 54 der einzelnen Flächenbereiche. Zur Bewertung 54 der sowohl geometrisch als auch hinsichtlich der Beleuchtung entzerrten Flächenstücke kommen Verfahren zur Texturanalyse für Problemstellungen mit "zweidimensionaler" Charakteristik zum Einsatz.

Zur Erzeugung der Eingangsbilddaten für das vorgeschlagene Verfahren können beispielsweise die im Folgenden beschriebenen Sensoranordnungen dienen.

Die Sensoranordnung in **Figur 1** besteht aus den Komponenten optoelektronischer Sensor A, z.B. CCD-Kamera, einer geeigneten, steuerbaren Beleuchtungseinrichtung B, z.B. ein Streifenprojektor, die in einer bekannten, festen, räumlichen Beziehung zueinander stehen sowie einer Steuer- und Auswerteeinheit C (oder 55), mit der Sensor und Beleuchtung verbunden sind. Der optoelektronische Sensor (A) dient dabei der Erfassung von photometrischen Informationen, d.h. der Grauwert- oder Farbbilder, wie Figur 5a zeigt. Gleichzeitig kann der Sensor (A) zusammen mit der Beleuchtung (B) und der Steuereinheit (C) einen 3D-Sensor nach dem Triangulations-Prinzip bilden, z.B. durch Auswertung von Bild- und Projektionssequenzen nach Verfahren wie "Phasenshift", "Coded-Light" oder "Moire".

Alternativ ist in **Figur 2** auch die Kombination von zwei oder mehr optoelektronischen Sensoren Aᵢ, z.B. CCD-Kameras, in bekannter räumlicher Anordnung denkbar, die zur Gewinnung der photometrischen Information dienen und wobei die korrespondierende geometrische Information (3D Tiefenbild) durch Auswertung mehrerer photometrischer Bilder der verschiedenen Sensoren Aᵢ durch passive Stereoverfahren erzielt wird.

Ebenso ist eine Anordnung nach **Figur 3** möglich, bei der photometrische und geometrische Information durch getrennte Sensoren erfaßt wird, z.B. eine CCD-Kamera (A) und ein scannendes, laser-basiertes 3D-Meßsystem B1 nach dem Laufzeit-Prinzip.

Weitere Sensoranordnungen, die aus dem Stand der Technik bekannt sind, können ebenfalls eingesetzt werden, wenn sie sich dazu eignen, ein Tiefenbild und ein dazu räumlich korrespondierendes Intensitätsbild, also photometrische und geometrische Informationen bereitzustellen, die entweder sequentiell aufgezeichnet werden, oder gleichzeitig so aufgezeichnet werden, daß die dann vorhandenen Bilddaten miteinander korrespondieren. Die Korrespondenz bedeutet eine pixelgenaue Zuordnung dieser beiden Bilddaten, wobei auch die Tiefeninformation als Bilddaten angesehen werden. Beispiele von Sensoranordnungen zur Gewinnung von Tiefenbildern sind aus dem Stand der Technik bekannt, vgl. letzter Absatz der Beschreibung, Ziffer (a).

Die Realisierung der Sensoranordnung für die korrespondierende, sequentielle Erfassung von photometrischer und geometrischer Information kann so durch geschickte Nutzung der beschriebenen optischen Komponenten erreicht werden. Ausgegangen werden soll deshalb für die weitere Bildbearbeitung von zwei Beispielen von Bilddaten. Ein Beispiel findet sich in Figur 5a als Intensitätsbild mit spezifisch herausgezeichneten Flächenbereichen 1,2,3,4 sowie im Bild nicht sichtbaren Flächenbereichen 1*,3*, die rückwärtige Flächen sind, die aus dem gezeigten Blickfeld der Sensoranordnung nicht sichtbar sind, aber bei einer Relativbewegung zu einer zweiten Relativposition von Sensor und Prüfstück sichtbar werden. Eine dazu korrespondierende Bildinformation findet sich in Figur 5b als Tiefenkarte. Diese Tiefenkarte ist hier dargestellt durch unterschiedliche Helligkeitswerte, stellt aber keine unterschiedlichen Helligkeiten, sondern unterschiedliche Abstände von dem Sensor, beispielsweise B1 in Figur 3 dar. Die Abstandsmaße sind in einer vertikalen Legende zwischen 283,9 mm und 166,9 mm dargestellt; je dunkler das Bild, desto weiter entfernt ist der korrespondierende Bildpunkt auf den sichtbaren Flächenbereichen. Die Flächenbereiche 1 bis 4 von Figur 5a können ohne weiteres durch pixelgenaues Übereinanderlegen der Bilder identifiziert werden, so daß sie in Figur 5b nicht gesondert eingezeichnet sind. Die so gebildeten beiden Eingangsbilder, die Intensitätsinformation und die Tiefeninformation, finden sich identifiziert in der Figur 4 über die Eingangspfade 49 und 52, die aus der Datenaufnahme zu einerseits der Interpolation 50a und andererseits der Shading-Korrektur 52b führen.

Die Datenaufnahme C entspricht der Steuer- und Auswerteeinheit C, die entsprechend den angeschlossenen Sensoren bzw. Beleuchtung und Sensoren als nur Aufnahmeeinheit, nur Auswerteeinheit oder Steuer- und Auswerteeinheit ausgebildet ist. Das von ihr bereitgestellte Intensitätsbild gemäß Figur 5a und Tiefenbild gemäß Figur 5b entstammt dem schematisch in Figur 1 eingezeichneten Werkstück 20, dessen Achse mit 101 bezeichnet ist und gegenüber der optischen Achse 100 des Sensors A eine Relativlage besitzt. Diese Achse 101 ist in den Bildern 5a und 5b von rechts nach schräg hinten links in die Papierebene orientiert zu denken, auch wenn sie als solches nicht eingezeichnet ist.

Bevor ein Verfahren zur Oberflächenbildbearbeitung mit den gemäß Figur 3 gewonnenen Bilddaten ausgeführt werden kann, erfolgt zur Erzielung korrespondierender Bilddaten aus räumlich nicht identisch angeordneten Sensoren eine Koordinatentransformation, welche die Meßdaten des 3D-Meßsystems B1 anhand der bekannten Relativpositionen beider Systeme auf das Koordinatensystem der CCD-Kamera A abbildet.

Die zuvor bereits angesprochene Figur 4 soll Ausgangspunkt einer Beschreibung des Verfahrens sein, wobei die dort eingezeichneten einzelnen Pfade 49, 50, 51, 52 als Anhaltspunkt und Leitfaden für die folgende Beschreibung dienen sollen. Kurz skizziert ist das Endprodukt gemäß Figur 8 das Ausgangsbild aus der geometrischen Entzerrung 53, welches Ausgangsbild durch eine zweidimensionale Methode der Oberflächenprüfung oder -analyse bewertet wird. Ausgangspunkt sind die Bilddaten der Geometrieinformation und der photometrischen Information aus den zuvor beschriebenen Sensoranordnungen, die in die Pfade 49 (Geometrieinformation) und 52 (photometrische Information) geleitet werden. In der Geometrie werden nach einer Interpolation 50a zwei weitere Pfade beschritten, ein Pfad 50 mit einer Glättung 50b und ein paralleler Pfad 51, bei dem eine "Segmentierung" vorgenommen wird, die im folgenden detailliert erläutert ist. Diese beiden Pfade stellen zwei Eingangswerte der erwähnten geometrischen Entzerrung 53 bereit, namentlich Steuerinformation zur Anpassung eines Gitternetzes und maskierte Geometrieinformation zur Definition eines nicht ausgerichteten Oberflächenstücks, das geometrisch entzerrt werden soll. Diesem Oberflächenstück entspricht eine Helligkeitsinformation als photometrische Information, die im rechten Pfad 52 bearbeitet wird, durch eine Helligkeitskorrektur 52b und eine Kontrastveränderung 52c.

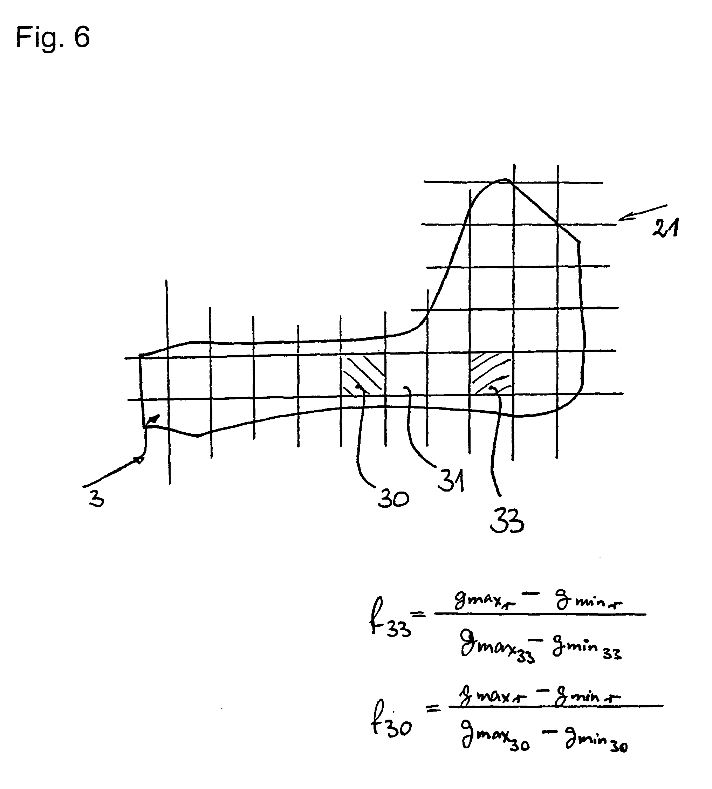

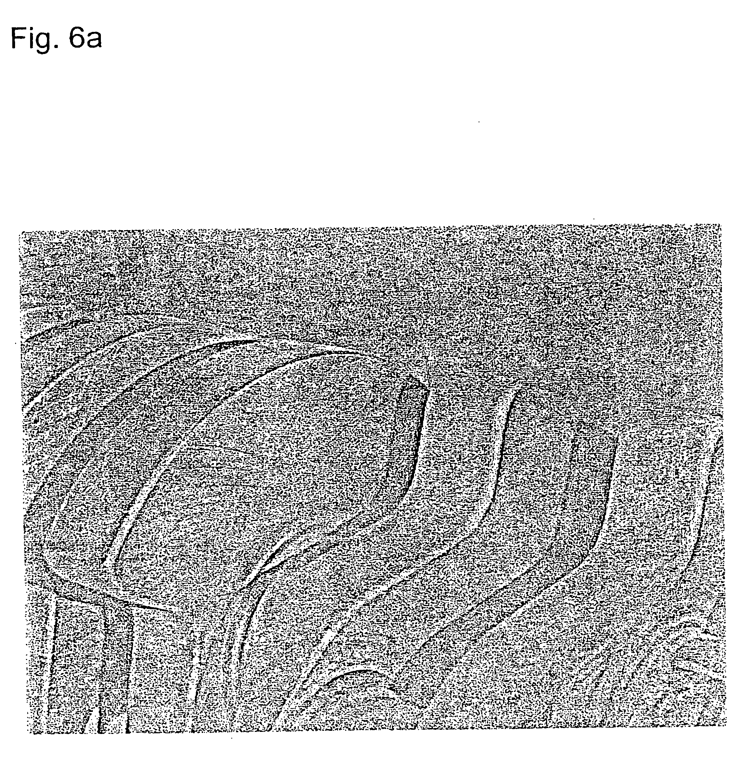

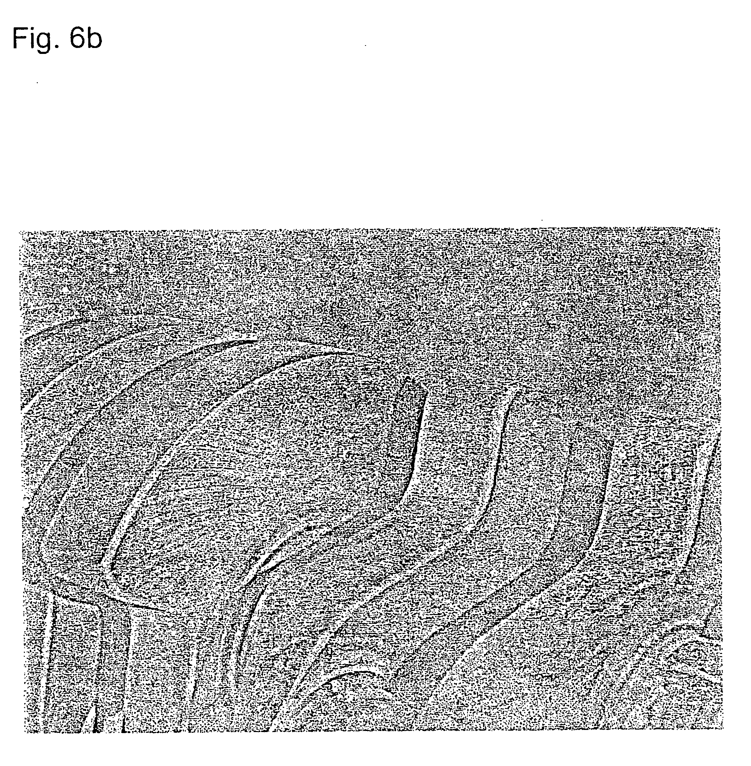

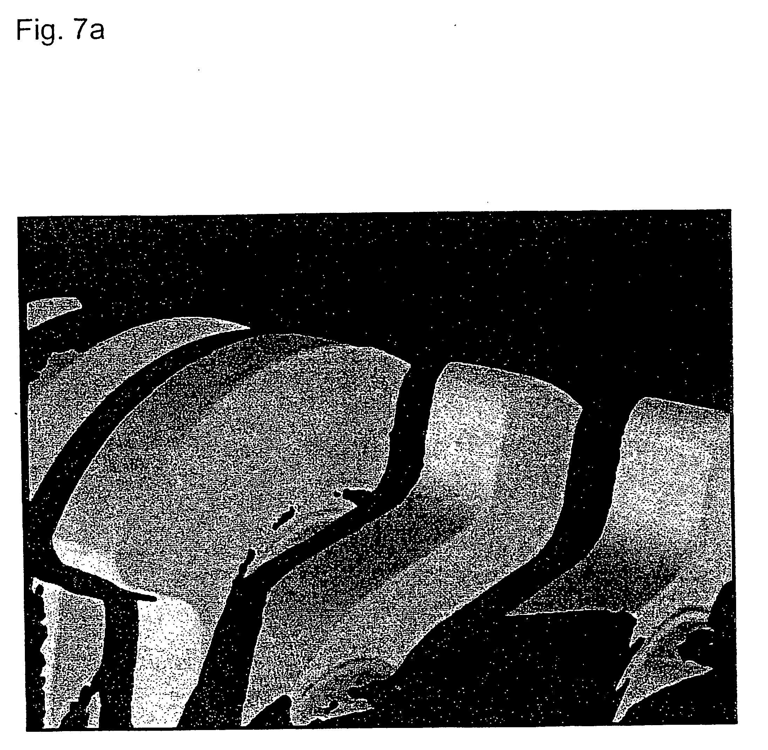

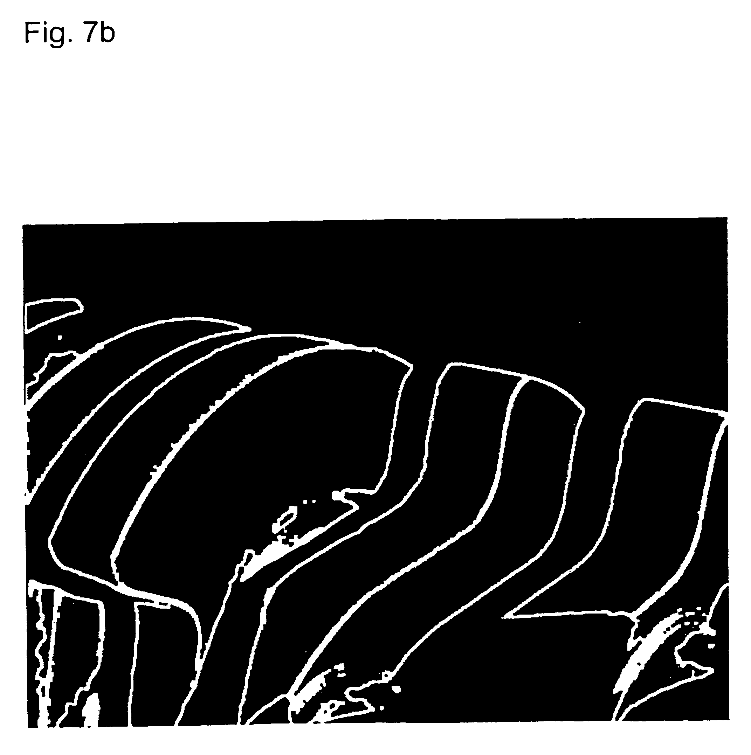

In dem Blockschaltbild wird links die Tiefenkarte gemäß Figur 5b und rechts das Intensitätsbild gemäß Figur 5a verarbeitet. An einigen Stellen im Blockschaltbild ist auf Figuren verwiesen, die die entsprechenden Bilddarstellungen der Figur 5a nach der jeweiligen Bearbeitung zeigen, so die Figuren 7a, 7b in der Segmentierung des Pfades 51, das bereits erwähnte Ausgangsbild der Figur 8 mit den geometrisch entzerrten Flächenstücken 1, 2, 3 und 4, sowie die beiden Helligkeitsbilder der Figuren 6a und 6b nach der Helligkeitsanpassung und nach der Kontrastbearbeitung. Letzteres Bild der Figur 6b ist das Eingangsbild mit der Helligkeitsinformation, die durch die geometrische Entzerrung in eine räumlich ebene (plane) Lage gebracht wird und entspricht beispielsweise dem Flächenstück 3 aus Figur 8, das selbst in der Figur 6 noch einmal wiedergegeben ist, wo seine Kontrastentzerrung näher erläutert ist.

Zusätzlich zu den beschriebenen Pfaden bestehen auch drei Querkopplungen 52a, 62b und 62c, die am Ende der einzelnen Pfade kurz angesprochen werden.

### A. Geometrieentzerrung

Die Entzerrung von digitalen Bildern spielt im Bereich der Photogrammetrie eine große Rolle. Viele Anwendungen benötigen entzerrte Bilder, die unter dem Begriff "Orthophoto" zusammengefaßt werden. Diese Orthophotos besitzen die vollständige Information des Ursprungsbildes, weisen aber die gleichen geometrischen Eigenschaften wie Karten auf. Mathematisch bedeutet die Erzeugung eines Othophotos die Umbildung von einer zentralperspektivischen Abbildung auf eine Parallelprojektion.

Typische Anwendungen von Orthophotos sind Landkarten, die aus Satellitenbildern berechnet werden, oder die Architekturphotogrammetrie mit dem Ziel der Denkmalpflege und der Dokumentation historischer Bauwerke. Die Generierung digitaler Orthophotos basiert auf einer Koordinatentransformation zwischen Ursprungsbild (Aufnahme der Kamera) und Zielbild (Orthophoto) unter der Voraussetzung einer analytischen Beschreibung der Oberflächengeometrie und gehört damit zur Klasse der parametrischen bzw. modellbasierten Verfahren.

Alternativ kann zur Generierung von Orthophotos auch eine nichtparametrische Vorgehensweise gewählt werden, wobei aber nur bei ebenen Flächen gute Resultate zu erwarten sind. Für die Berechnung der Orthophotos werden dabei digitale Flächenmodelle zusammengesetzt.

In beiden Fällen kommen Interpolationsverfahren (z.B. "nächster Nachbar", bilinear, bikubisch) zum Einsatz, da die Koordinatentransformation nicht notwendigerweise die Mittelpunkte der Pixel von Ursprungs- oder Zielbild trifft.

Eine andere Möglichkeit zur Entzerrung beruht auf der Annahme einer geringen, lokal vernachlässigbaren Oberflächenkrümmung. Das zu untersuchende Oberflächensegment wird durch drei helle Laserpunkte markiert und mit der Kenntnis der Kalibrationsparameter der drei Laser und der Kamera in eine sog. Normalebene rücktransformiert. In dieser Normalebene erfolgt die weitere Auswertung mittels Texturanalyse. Dieser Ansatz beschreibt eine lokale Näherung, allerdings mit dem Vorteil, daß keine analytische Beschreibung der Oberfläche vorliegen muß.

### B. Beleuchtungskorrektur

Zur Oberflächenprüfung werden die Auswirkungen der aktuellen Beleuchtungsanordnung berücksichtigt. Die Positionen von Lichtquellen bezüglich des zu beleuchtenden Objekts und bezüglich der Kamera haben gravierenden Einfluß auf die auswertbaren Oberflächeneigenschaften. So kann die Richtung von Beleuchtungseinheiten die im Sensor erkennbare Vorzugsrichtung von Texturen maßgeblich bestimmen, vgl. letzter Absatz der Beschreibung, Ziffer (b). Die Beleuchtungsrichtung wirkt dabei als richtungsabhängiger Filter, was für nachfolgende Texturauswertungen von beeinflussender Bedeutung ist. Entsprechendes gilt auch für den Einfall von Fremdlicht.

Die Konzeptionierung der Beleuchtung erfolgt dabei üblicherweise mit dem Vorwissen über zu erwartende Eigenschaften der auszuwertenden Oberflächen. Das Erstellen der optimalen Beleuchtungskonfiguration gestaltet sich problemlos, wenn ebene Oberflächen mit einer statischen Anordnung von Sensoren und Lichtquellen beleuchtet werden. In derartigen Fällen genügt eine einmalige Justierung, um gleichbleibende Qualität im Auswertungsprozeß zu gewährleisten. Hierbei wählt man oftmals "Flutbeleuchtung", um eine gleichmäßige Helligkeit über einen großen Flächenbereich zu erzielen.

Deutlich schwieriger ist die Auswahl einer geeigneten Beleuchtung für gekrümmte oder schief zur optischen Achse liegenden Oberflächen, vor allem dann, wenn die statische Aufnahmesituation verlassen wird und nacheinander Aufnahmen aus verschiedenen räumlichen Blickwinkeln (von unterschiedlichen Orten aus) erfolgen.

Ein zusätzliches Problem sind dabei die Reflexionseigenschaften der Oberflächen, wobei in einer einzelnen Aufnahme durchaus stark glänzende Bereiche direkt neben matten und rein diffus streuenden Flächen zu sehen sein können.

Die Bildqualität von Aufnahmen ungleichmäßig ausgeleuchteter Flächen läßt sich mittels einer sog. Shading-Korrektur verbessern. Dabei wird von der Originalaufnahme das tiefpaßgefilterte Originalbild subtrahiert und anschließend zum Grauwert jedes Pixels ein konstanter Offset addiert. Die Größe des Tiefpaßfilters richtet sich nach der Größe der Oberflächenstrukturen im Kamerabild.

Die Shading-Korrektur eignet sich sehr gut zur Verbesserung von Aufnahmen diffus reflektierender Flächen. Außerdem ist keine Kenntnis von Beleuchtungs- oder Kameraposition nötig. Allerdings lassen sich mit diesem Verfahren gerichtete Reflexionen nur in stark begrenztem Umfang kompensieren. Je ausgeprägter direkte Reflexionen ausfallen, um so geringer ist der Verbesserungseffekt, bedingt durch die Fensterung mit dem Tiefpaßkernel. Zusätzlich bewirkt die Tiefpaßfilterung - je nach Größe des Tiefpaßkemels - eine Verkleinerung des auswertbaren Bildbereichs.

Zur Kompensation von gerichteten Reflexionen bzw. zur Trennung von gerichteten und diffusen Reflexionen gibt es eine Reihe von Verfahren, die bei unterschiedlichen Voraussetzungen angewendet werden können.

Ausgangspunkt eines Verfahrens zur Detektion von gerichteten Reflexionen in Grauwertbildern ist in eine Lambertsche Oberfläche, d.h. eine Fläche, die von allen Blickwinkeln aus gleichmäßig hell erscheint. Direkte Reflexionen werden dadurch erkannt, daß das angenommene Lambertsche Abstrahlungsverhalten durch rapide Helligkeitsänderungen im Grauwertbild verletzt wird.

Die Erfassung von Reflexionseigenschaften mit Intensitätsbild und Tiefenkarte beruht auf einem physikalischen Reflexionsmodell, mit dessen Hilfe Beleuchtungsrichtung und Reflexionsparameter iterativ angenähert werden. Weitere Voraussetzungen sind einerseits parallel einfallende Lichtstrahlen, was durch entsprechend große Entfernung der Lichtquellen vom Untersuchungsobjekt erreicht wird, und andererseits ein großer Abstand des bildaufnehmenden Sensors vom Objekt, modelliert durch Vorschalten eines telezentrischen Objektivs. Möglich sind mit diesem Vorgehen in ihrer Helligkeit korrigierte Intensitätsbilder.

Auch Farbe und Polarisation werden zur Separierung von direkten Reflexionen angewendet. Durch die Verknüpfung von Farb- und Polarisationsinformation werden für jeden Bildpunkt Bedingungen für die Reflexionskomponenten aufgestellt. Aus der Anwendung dieser Randbedingungen auf jeweils benachbarte Bildpunkte ermittelt man die Parameter der diffusen Reflexion.

Active-Vision-Systeme nutzen die Szenenbeleuchtung als einen während des Arbeitsablaufs zu bestimmenden und zu optimierenden Parameter. Ziel ist es hierbei, Bildeigenschaften wie Punkte, Kanten oder Texturen hervorzuheben, um Szeneninterpretation und Objekterkennung zu verbessern.

Im Hinblick auf Anwendungen zur visuellen Oberflächeninspektion wurden Verfahren entwickelt, die Robot Vision mit Active Vision kombinieren. Aufgrund der aus einem CAD-Modell gewonnenen Daten eines Prüfobjekts wird ein Prüfplan erstellt, der einzelne Sensorpositionen und die dazugehörigen Blickwinkel beschreibt. Abschließend erfolgt eine Optimierung des Prüfplans hinsichtlich einer minimalen zurückzulegenden Wegstrecke des optischen Sensors.

Alternativ kann aus einem gegebenen CAD-Modell eine Sequenz von räumlichen Positionen für einen generalisierten Sensor berechnet werden, von denen aus eine Inspektionsaufgabe optimal durchgeführt werden kann. Der generalisierte Sensor besteht aus einer oder mehreren physikalischen Aufnahmeeinheiten und kann Objekteigenschaften sowohl parallel (eine Sensorposition) als auch seriell auswerten (mehrere aufeinanderfolgende Sensorpositionen). Grundlage für das Aufstellen der Positionssequenz sind aus dem CAD-Modell gewonnene Sichtbarkeitsbereiche, in denen angegebene Objekteigenschaften vom Sensor beobachtet werden können. Jedem dieser Bereiche werden die Parameter Sichtbarkeit und Zuverlässigkeit zugewiesen. Der eigentliche Prüfplan erfolgt aus der Kombination der einzelnen Sichtbarkeitsbereiche mit Optimierungsalgorithmen.

Ein weiteres System verwendet als zentralen Bestandteil eine Kamera mit programmierbarem Sensor und Motorzoom-Objektiv. Um verschiedene Blickwinkel anzusteuern, ist vor der Kamera ein schwenkbarer Spiegel angebracht. Die Bildauswertung erfolgt mit Verfahren der Fraktalanalyse sowie morphologischen Operatoren. Das System arbeitet adaptiv anhand der gewonnenen Bilddaten. Im ersten Schritt nimmt man die Oberfläche mit niedrigster Zoom-Einstellung auf. Dadurch lassen sich mit wenigen Bilddaten große Oberflächenbereiche grob beurteilen. Sind potentielle Defekte aufzufinden, so werden im zweiten Schritt durch veränderte Zoom-Einstellung detailliertere Aufnahmen der betreffenden Regionen ausgewertet. Als konkrete Anwendung wird die Oberflächenprüfung von betonierten Ziegeln angegeben.

**C.** Der hier dargestellte Lösungsweg verwendet Tiefeninformation und Intensitätsinformation (photometrische und geometrische Meßdaten) aus den Pfaden 49, 52. Durch diesen multisensoriellen Ansatz stehen für jeden Bildpunkt neben dem Grauwert (Helligkeit, Farbe) auch die räumlichen Koordinaten eines jeweiligen Oberflächenelements zur Verfügung. Mit derartigen Eingangsdaten können gekrümmte oder schief zur optischen Achse orientierte Oberflächensegmente in eine plane Ebene transformiert werden. Dazu dient eine Geometrieentzerrungs-Komponente, die ohne Parametrisierung, d.h. ohne Modellwissen über die gekrümmte Fläche, die Rückführung in eine Ebene vornimmt.

Eine weitere, gesondert hervorzuhebende Komponente des Verfahrens ist die Kompensation der Beleuchtungseffekte, bestehend aus einer Angleichung der Hintergrundbeleuchtung und einer Kontrastanpassung, ohne die mit der Prüfung zu ermittelnden Fehlstellen auf den untersuchten Oberflächen zu verfälschen.

Die geometrisch und hinsichtlich der Beleuchtung korrigierten Flächenstücke (i.F. "Oberflächen") können anschließend mit Verfahren der Texturanalyse bewertet und geprüft. Mit der Bezeichnung "Textur" charakterisiert man die visuelle Erscheinung von Oberflächenstrukturen. Grundsätzlich unterscheidet man zwischen deterministischer Textur mit sich periodisch wiederholenden Texturelementen, und stochastischer Textur, welche keine gleichförmigen Elemente besitzt, aber trotzdem ein einheitliches Erscheinungsbild bei makroskopischer Betrachtungsweise liefert.

Aus anwendungsorientierter Sichtweise werden Texturanalyseverfahren eingesetzt, um Aussagen über die Beschaffenheit und Qualität von Oberflächen zu treffen. Es existieren zahlreiche Verfahren, die bei der Lösung von Problemstellungen mit ebener, zweidimensionaler Charakteristik zum Einsatz kommen, vgl. letzter Absatz der Beschreibung, Ziffern (c), (d) und (e). Voraussetzungen für eine erfolgreiche Anwendung dieser Verfahren zur Texturanalyse sind, daß die direkt untersuchten Oberflächen keine Krümmung aufweisen und parallel zum CCD-Sensor der Inspektionskamera liegen.

Eine oftmals gestellte Forderung ist die vollständige Prüfung des vorliegenden Werkstücks. Da nicht alle Oberflächenelemente von einer Beobachtungsposition zugänglich sind, müssen verschiedene Blickwinkel angefahren werden. Dies wird mit Hilfe einer Verfahreinheit (z.B. Roboter) ermöglicht, die die Sensorik zur optischen Datenaufnahme trägt.

Zur Datenaufnahme 55 werden ein oder mehrere Bildaufnahmesensoren (z.B. Zeilenkameras, Flächenkameras) und - bei Bedarf - eine oder mehrere Beleuchtungskomponenten B eingesetzt (z.B. strukturierte bzw. unstrukturierte Beleuchtung). Aus den aufgenommenen Daten, z.B. einer Kurbelwelle gemäß Figur 5a, erhält man einerseits Intensitätsbilder (z.B. Grauwertbilder, Farbbilder) und andererseits Tiefenkarten (3D-Koordinaten, Forminformation) gemäß Figur 5b nach Auswertung von z.B. verschiedenen Ansichten mit Korrespondenzbestimmung (Stereosehen) oder Auswertung von projizierten Lichtmustem der Beleuchtungseinheiten (z.B. Triangulationsverfahren: einfacher Lichtschnitt, Codierter Lichtansatz, Phasenshift, Moiré, Lasertriangulation).

Für das weitere Vorgehen wird von einer Korrespondenz zwischen Intensitätsbild und Tiefenbild ("pixelgenau deckungsgleiches Tiefenbild") ausgegangen.

Da üblicherweise durch z.B. Meßfehler, lokale Überbelichtungen usw. nicht zu allen Bildpunkten die 3D-Koordinaten gewonnen werden können, wird eine Interpolation 50a durchgeführt. Ausgehend vom aktuellen zu interpolierenden Pixel wird in allen vier Koordinatenrichtungen der nächste Stützpunkt gesucht. Damit erhält man im Idealfall vier Stützpunkte, mit denen eine bilineare Interpolation durchgeführt werden kann. Diese Interpolation wird außerdem in Abhängigkeit vom entsprechenden Intensitätswert vorgenommen (Schwellwertentscheidung). Diese Schwellwertentscheidung anhand des Intensitätswertes hilft, unnötigen Rechenaufwand zu vermeiden. Insbesondere bei großflächigen Bereichen, die nicht beleuchtet werden (z.B. Abschattungen) oder außerhalb des Kalibriervolumens liegen (z.B. Bildhintergrund), sind keine Stützstellen in der Nähe zum aktuellen Punkt aufzufinden. Durch zweckmäßige Wahl des Schwellwertes ist eine Anpassung auch an dunkle bzw. reflexionsarme Oberflächen möglich.

Sind keine Stützstellen in der lokalen Umgebung des aktuellen Punktes aufzufinden, wird die entsprechende Koordinatenrichtung für die Interpolation als ungültig ausmaskiert. Meßpunkte mit bekannten Tiefenwerten, die aber in großem Abstand zum aktuellen Punkt liegen, würden durch die Interpolation die Oberflächengeometrie zu stark verfälschen.

Durch eine weitere Schwellwertentscheidung - bezogen auf den räumlichen Abstand der Stützstellen - wird das Verschleifen von Kanten vermieden. Die entsprechenden Pixel bleiben weiterhin ungültig und werden bei einer späteren Regionensegmentierung als Kante interpretiert.

### Segmentierung

Die Aufgabe der Segmentierung im Pfad 51 von 51a bis 51d (auch: Regionenzuordnung) ist die Einteilung des von dem Sensor aufgenommenen Intensitätsbildes in logisch zusammengehörende Bereiche, z.B. Flächenstücke 1,2,3,4 in Figur 5a oder die sichtbaren Flächenstücke in Figur 7b, die gleichbleibende Bearbeitungsspuren aufweisen und mit einem unveränderten Parametersatz geprüft werden können. Dazu werden im ersten Schritt anhand der Tiefenwerte Kanten bei 51a extrahiert. Anschließend werden mit einem sog. Closing bei 51b aus den Kanten zusammenhängende Linien gebildet, so daß abgeschlossene Flächenstücke bei 51c entstehen. Im letzten Schritt erfolgt die Generierung 51d einer Maske, die durch eindeutige Kennzeichnung die Zugehörigkeit aller Pixel zu einer jeweiligen Region definiert. Das folgende sind Teile der Segmentierung im Pfad 51.

### Kantenfilterung

Ziel der Kantenfilterung 51a ist es, räumliche Kanten, d.h. kleine Krümmungsradien der Werkstückoberfläche, zu bestimmen. Diese Kanten stellen letztendlich die Berandungslinien der zu segmentierenden Flächenstücke dar.

Konventionelle Verfahren zur Kantenfindung (z.B. Gradientenfilter für Grauwertbilder) sind hier prinzipbedingt im Nachteil. Beispielsweise besitzen ebene Flächenstücke, die verkippt zum Sensor liegen, in der Grauwertdarstellung der Tiefenkarte einen Gradienten, obwohl keine Krümmung vorliegt. Zudem sind Kanten des Werkstücks in der Grauwertdarstellung relativ schwach ausgeprägt. Daher ist mit einem konventionellen Kantenfilter keine stabile Kantenextraktion gewährleistet.

Zur Kantenfindung werden aus der Tiefenkarte von **Figur 5b** zunächst die Normalenvektoren gemäß **Figur 7a** berechnet. Damit lassen sich den einzelnen Pixeln der Bildmatrix die entsprechenden Normalenvektoren zuordnen. Anschließend wird die Verkippung benachbarter Normalenvektoren bestimmt. Ein Kantenbild selbst erhält man durch Binarisierung der Verkippungsgrößen für jedes Pixel anhand eines applikationsspezifisch zu wählenden Schwellwertes.

Außerdem kann eine Randbedingung zu berücksichtigen sein, die von der Kompensation der Hintergrundbeleuchtung im Intensitätsbild herrührt. Durch die dort angewendete Tiefpaßfilterung verkleinert sich der auswertbare Bildbereich entsprechend der Größe des Filterkemels. Daher wird zusätzlich zur Binarisierung des Kantenbildes ein Rand um das gesamte Bild in der "Farbe" der Kanten gezogen.

### Konturpunktverkettung

Um evtl. auftretende Lücken in den Kantenlinien zu schließen, kommen morphologische Operatoren zur Konturpunktverkettung 51b zum Einsatz. Dabei kann z.B. ein sog. Closing auf das binäre Kantenbild aus dem vorherigen Arbeitsschritt angewendet werden. Das Closing besteht aus einer Dilation gefolgt von einer Erosion.

Ausgangspunkt für diese Operatoren ist die Definition von Strukturelementen, welche als Operatormasken in die Auswertung eingehen. Diese Masken werden pixelweise über das Ursprungsbild geschoben. Für die Erosion gilt, daß im Ergebnisbild alle Pixel zu 1 gesetzt werden, wenn alle Pixel unterhalb des Strukturelements im Originalbild (hier das Kantenbild) den Wert 1 besitzen. Bei der Dilation wird das entsprechende Pixel im Zielbild zu 1 gesetzt, wenn sich mindestens ein Pixel im Originalbild unterhalb der Maske mit dem Wert 1 befindet. Zu beachten ist, daß es sich dabei um Binärbilder handelt, die definitionsgemäß nur die Werte 0 (Bildhintergrund) und 1 (Kantenlinie) annehmen können. Dies gilt sowohl für die Eingangs- als auch für die Ausgangsbilder.

### Regionenzuordnung

Aus dem Binärbild mit den geschlossenen Kanten wird nun eine Maske für die geometrische Entzerrung 53 erstellt. Mit der Maske sind die einzelnen abgeschlossenen Flächenbereiche eindeutig identifiziert. Dazu wird jedem Pixel eines geschlossenen Flächenstücks in der Maske der gleiche Zahlenwert zugeordnet, so daß mehrere anders numerierte Flächenstücke entstehen, wie **Figur 7c** zeigt. Diese Zahlen können auch unterschiedlichen Graustufen entsprechen, wobei mit 8 bit max. 255 Flächenstücke zugeordnet werden können, wenn der maximale mögliche Grauwert für die Kantendarstellung reserviert bleibt. In dieser Zuordnung ist die Figur 7c eine Maske zur eindeutigen Identifizierung von begrenzten Bildregionen im Gesamtbild. Es sind mehrere verschiedene Grauwerte dargestellt, die den zugeordneten Zahlenwerten zur Identifizierung entsprechen und wobei jeweils ein Grauwert für nur eine Region vorgesehen ist.

Diese Regionenzuordnung 51c erfolgt durch ein sog. Labeling, das die Pixelkoordinaten zusammenhängender Gebiete liefert. Der Eingangsdatensatz für diese Zuordnung entspricht also dem binären Kantenbild aus dem vorangegangenen Bearbeitungsschritt.

### Beleuchtungskompensation

Das aufgenommene Intensitätsbild enthält von Beleuchtung und Oberflächeneigenschaften verursachte Effekte, die einer erfolgreichen Auswertung abträglich sind. Mit zunehmendem Abstand von der Lichtquelle erscheinen die Flächenstücke dunkler und kontrastärmer. Dieser Effekt tritt auch dann auf, wenn die Oberfläche relativ zum Sensor stark verkippt ist. Es hat sich also eine Korrektur sowohl der Helligkeit als auch des Kontrastes als vorteilhaft erwiesen, was im Pfad 52 geschieht, parallel zu dem Pfad 51. Das folgende sind Elemente der Beleuchtungskompensation im Pfad 52.

### Shading-Korrektur

Mit einer sog. Shading-Korrektur 52b erreicht man die Herstellung einer gleichmäßigen Grundhelligkeit über das gesamte Bild, unabhängig von einzelnen segmentierten Regionen. Das Zielbild (das global, ohne Aufteilung in der Helligkeit veränderte Bild) besitzt einen Mittelwert, der dem halben maximal möglichen Intensitätswert entspricht, vgl. **Figur 6a.**

Zur Durchführung der Shading-Korrektur wendet man zunächst eine Tiefpaßfilterung auf das Originalbild an. Dadurch erreicht man eine "Verschmierung" von hochfrequenten Bildanteilen (z.B. scharfe Konturen) und auch eine Verteilung von lokalen Beleuchtungseffekten auf einen größeren Bildbereich, vgl. letzter Absatz der Beschreibung, Ziffer (f).

Anschließend wird pixelweise die Differenz zwischen dem originalen und dem tiefpaßgefilterten Intensitätsbild gebildet und ein konstanter Offset, der dem halben maximal möglichen Intensitätswert entspricht, addiert. Im Fall von Grauwertbildern mit 256 Graustufen benutzt man daher einen Offset von 128.

Da nach der Ausführung der pixelweisen Differenz die Intensitätswerte um den Wert Null als Mittelwert schwanken, bringt man das Differenzbild durch die Addition des gewünschten Mittelwertes von 128 in eine leicht darstellbare und auswertbare Gestalt.

Abhängig von der Größe der Filtermaske geht mit der Tiefpaßfilterung des Intensitätsbildes eine Verkleinerung des auswertbaren Bildbereichs einher. Diese Verkleinerung wird auch bei der Regionensegmentierung berücksichtigt, da ein zusätzlicher, nicht auswertbarer Bildbereich entsteht.

Durch die Shading-Korrektur wird ein Bild mit einem im Mittel konstanten Intensitätswert generiert. Für eine zuverlässige Auswertung von Oberflächeneigenschaften reicht dies jedoch noch nicht aus, da sich Eigenheiten der untersuchten Flächenstücke auch im Kontrast widerspiegeln. Daher soll neben einer Korrektur der Grundhelligkeit auch eine Angleichung des Kontrastes vorgenommen werden.

### Kontrastangleichung

Im Gegensatz zur Shading-Korrektur 52b handelt es sich bei der Kontrastangleichung 52c um eine regionenbasierte Vorgehensweise, d.h. nur innerhalb einer jeweils abgeschlossenen Region werden Änderungen am Kontrast vorgenommen. Zusätzlich zum Intensitätsbild gemäß **Figur 6a** werden aus der Regionenmaske charakteristische Parameter über die Regionen herangezogen, um in jeweils einer Region 1, 2 oder 3 von Figur 5a den Kontrast zu verändern.

Die Realisierung der Kontrastangleichung erfolgt durch einen einzelne Fenster bildenden "Iokalen Operator", den man abschnittsweise auf ein helligkeitskorrigiertes Bild aus dem vorherigen Abschnitt 52b anwendet, im Sinne einer "lokalen Filterung". Innerhalb eines gerade bearbeiteten Bildfensters werden ein maximaler und ein minimaler Intensitätswert gₘₐₓ bzw. gₘᵢₙ bestimmt.

Dies erfolgt innerhalb eines jeweiligen Fensters mit vorab festgelegter Größe, das anhand eines Vorwissens über das aktuelle Werkstück 20 an entsprechender Stelle der jeweiligen Bildregion plaziert wird. Die Referenzparameter (=Vorwissen) für die Kontrastangleichung können aus einem garantiert fehlerfreien Bildbereich oder anhand eines Gutteils, entsprechend der Welle 20 ermittelt werden.

Es wird ein Raster 21 als "lokaler Operator" über die aktuelle Bildregion 3 geschoben, so daß die einzelnen Fenster 30,31,33 des Rasters nebeneinander zu liegen kommen. In jedem Fenster bestimmt man maximalen und minimalen Intensitätswert und berechnet daraus einen Verstärkungsfaktor f₃₀, f₃₃, der dem Quotienten der beiden Kontrastdifferenzwerte "g" entspricht; vgl. hierzu die **Figur 6** mit der dortigen Berechnung von f₃₀, f₃₃ für die Fenster 30 und 33.

Falls der Verstärkungsfaktor fᵢⱼ mindestens den Wert 1 besitzt, werden alle Intensitätswerte innerhalb des jeweiligen Fensters mit diesem multipliziert. Mit dieser Schwellwertentscheidung verhindert man, daß Oberflächendefekte, die im Intensitätsbild mit großem Kontrast erscheinen, unerwünscht an fehlerfreie Bildbereiche angeglichen werden. Es entsteht ein im Kontrast verbessertes Bild gemäß **Figur 6b**.

### Prüfplan

Sowohl die Positionen des Sensors zur Datenaufnahme als auch die momentan auszuwertenden Bildregionen richten sich nach dem aktuell vorliegenden Werkstück 20. Anhand des Vorwissens wird also ein Prüfplan erstellt werden, der die einzelnen Sensorpositionen und Blickrichtungen definiert. Darüber hinaus verwendet man für jede Ansicht des Werkstücks eine "Vergleichsmaske", um zwischen zu prüfenden und vemachlässigbaren Oberflächenbereichen zu unterscheiden. Jeder interessierenden Bildregion wird ein spezifischer Parametersatz zugeordnet, der z.B. Auflösung des entzerrten Bildes, Idealkontrast und geeignete Prüfmerkmale festlegt.

### Entzerrung

Ziel einer Entzerrung 53 ist es, von gekrümmten oder zum Sensor verkippten Flächenstücken eine zweidimensionale Repräsentation zu generieren, welche mit existierenden und erprobten Verfahren 54 der Texturanalyse für ebene Oberflächen quantitativ bewertet werden kann.

Voraussetzungen für eine erfolgreiche Anwendung dieser Verfahren zur Texturanalyse sind, daß die untersuchten Oberflächen keine Krümmung aufweisen und parallel zum CCD-Sensor der Inspektionskamera liegen. Das bedeutet, daß in jedem Kamerapixel Oberflächensegmente gleicher Größe gesehen werden. Die Oberflächen von Werkstücken mit starker dreidimensionaler Ausprägung verletzen im allgemeinen die obigen Forderungen. In vielen Fällen muß eine Prüfung beliebig geformter Oberflächen (sog. Freiformflächen) durchgeführt werden, so daß die räumliche Geometrie für den Prüfvorgang zu berücksichtigen ist. Durch die Entzerrung wird die geforderte Beziehung zwischen Pixel und Oberflächenelement wiederhergestellt.

Der Entzerrungsalgorithmus, vgl. letzter Absatz der Beschreibung, Ziffer (g), basiert auf der Berechnung eines Gitternetzes, das der Pixelmatrix überlagert wird. Wie bereits erwähnt, ist es für eine erfolgreiche Anwendung von Verfahren zur zweidimensionalen Texturanalyse notwendig, daß die Oberflächenelemente, die in den Kamerapixeln gesehen werden, alle die gleiche Größe besitzen. Diese Eigenschaft wird durch die einzelnen Gitterelemente des Netzes gewährleistet. Es handelt sich also um Gitterelemente, die auf der 3D-Oberfläche Flächenelemente konstanter räumlicher Ausdehnung beschreiben.

Für die Gitternetzberechnung ist keine analytische Beschreibung der Oberflächengeometrie notwendig. Es handelt sich hierbei um parametrisierungsfreies Verfahren. Das Gitternetz adaptiert sich an die aktuelle Krümmung der Oberfläche und stellt keine Ebenenapproximation dar. Die einzelnen Gitterelemente werden durch Geradenstücke begrenzt, so daß jedes Element durch vier Linien bzw. durch vier Eckpunkte vollständig charakterisiert ist. Durch diese Art der Berandung entsteht in abgewickelter Form ein Gitternetz mit Rechtecken, das eine reguläre Struktur aufweist - analog zur Pixelmatrix eines CCD-Sensors.

Jedem Gitterelement wird ein Intensitätswert zugewiesen, der sich unter Berücksichtigung der jeweiligen flächenhaften Ausdehnung aus denjenigen Intensitätswerten bestimmt, die unterhalb dieses Gitterelements im Kamerabild zu finden sind. Die Zuordnung des Intensitätswertes zu jedem Gitterelement erfolgt durch flachenabhängige Gewichtung der durch Pixelmatrix und Gitterlinien berandeten "Regionen" des Gitterelements, Summierung und anschließender Normierung mit der Gesamtfläche des Gitterelements.

Die Eingangsparameter für die Entzerrung bestimmt man sowohl aus dem Vorwissen als auch aus der aktuellen Aufnahme. Anhand der bekannten Gestalt des Werkstücks legt man Auflösung und Ausrichtung (Winkel) des Gitters fest. Für den Gittermittelpunkt wählt man den Schwerpunkt des momentanen Flächenstücks. Eine Dimensionsangabe für das entzerrte Bild ist nicht unbedingt erforderlich, da das Gitternetz bis zur Flächenberandung wachsen kann.

Das die Entzerrung bewirkende Gitternetz wächst dabei z.B. vom Flächenschwerpunkt bis zum Rand des aktuellen Flächenstücks. Für die oben beschriebene Entzerrungsstrategie sind dabei Erweiterungen sinnvoll, die ein "Umfahren" von Hindernissen innerhalb der Flächen zulassen. Die einzelnen Gitterpunkte werden dann nicht mehr ausschließlich von der Gittergrundlinie ausgehend berechnet, sondern gegenseitig in Beziehung gesetzt, so daß neue Gitterpunkte aus unmittelbar benachbarten generiert werden können - ähnlich wie ein Algorithmus zum Auffüllen von Flächen mit einer bestimmten Farbe.

Außerdem kann das Gitternetz auch über Kanten hinweg aufgezogen werden. Es wird also nicht gefordert, daß die untersuchte Oberfläche "nur" gekrümmt (im Sinne eines großen Krümmungsradius) oder eben und verkippt ist. Somit kann das Entzerrungsverfahren leicht an spezielle Aufgabenstellungen angepaßt werden.

### Glättung der Tiefendaten

Als letzter Schritt vor der Entzerrung 53 wird im Pfad 50 eine Glättung 50b der Tiefendaten vorgenommen. Ziel dieser Filterung ist die Gewinnung einer makroskopischen Betrachtungsweise des Werkstücks. Durch die Glättung werden Oberflächenrauhigkeiten eliminiert, so daß die Entzerrung auf der zugrundeliegenden Oberflächenform ansetzen kann. Die charakteristischen Eigenschaften der Oberfläche (Textur, Defekte, ...) werden anhand des Intensitätsbildes ausgewertet, so daß durch die Entzerrung die abbildungsbedingten Skalierungsunterschiede ausgeglichen werden, ohne Störungen von Oberflächen mit starker Porösität oder Körnigkeit einzubeziehen.

Der Filteralgorithmus orientiert sich am konventionellen Mittelwertfilter für Grauwertbilder. Die Anwendung erfolgt jedoch auf die Tiefenkarte nach Figur 5b, d.h. auf die kartesischen Koordinaten der einzelnen Oberflächenelemente, getrennt nach x-, y- und z-Komponenten. Die drei Datensätze für die Koordinatenkomponenten werden also einzeln gefiltert.

Die Filtermaske wird pixelweise über die Tiefenkarte geschoben. Für den aktuell zu filternden Tiefenwert wird zunächst evaluiert, ob genügend definierte Tiefenwerte innerhalb der Filterfensters zur Verfügung stehen. Ist dies der Fall, so wird der aktuelle Tiefenwert durch Mittelung aller unter der Filtermaske liegenden Werte berechnet. Dieser Algorithmus wird jeweils auf die x-, y- und z-Komponente angewendet. Der zu filternde Tiefenwert selbst muß dabei nicht definiert sein. Das Verfahren bewirkt also zusätzlich eine weitere Interpolation.

Durch die Festlegung einer Mindestzahl von definierten Werten im Filterfenster wird dabei verhindert, daß getrennt voneinander zu behandelnde Flächenstücke "ineinanderwachsen" oder vormals undefinierte Bereiche unberechtigterweise mit Tiefendaten aufgefüllt werden.

Anwendbar sind aber auch andere Arten von Filterung, die eine Glättung bewirken, z.B. ein modifizierter Median-Filter.

Die eingangs angesprochenen Querkopplungen mit den gestrichelten Pfaden 52a, 62b und 62c sollen kurz erläutert werden. Mit ihnen nimmt im Zuge des Gesamtverfahrens die photometrische Information einen Einfluß auf die geometrische Information und anders herum.

Die datentechnische Verbindung von der Helligkeitskorrektur 52b zu der Kantenfilterung 51a in dem Segmentierungspfad 51 hat folgende Funktion. Durch die Helligkeitsbeeinflussung 52b verkleinert sich der auswertbare Bildbereich. Dieses wird mit einer Ausmaskierung des Randbereiches im Kantenbild berücksichtigt.

Bereits zuvor, bevor die Helligkeitskorrektur durchgeführt wird, nimmt die photometrische Information über Pfad 52a Einfluß auf die Interpolation 50a am Ende des Eingangspfades 49 der geometrischen Information. Die Interpolation dient der Ergänzung von durch das Meßverfahren nicht gewonnen Bildpunkten. In sehr dunklen Bereichen werden die Informationen des Intensitätsbildes des Pfades 52 verwendet, um eine Interpolationsrechnung an der entsprechenden Stelle der geometrischen Information im Pfad 49 (der Tiefenkarte) zu unterdrücken. Auch ohne Unterdrückung wären hier keine sinnvollen Ergebnisse bei der Interpolationsrechnung zu erwarten. Dieser Einfluß ist eine lokale Ausmaskierung oder Ausblendung von Tiefeninformation, gesteuert durch dunkle Stellen der Helligkeitsinformation, wobei daran erinnert wird, Der Einfluß 62c von den beiden Funktionsblöcken Regionenzuordnung und Maskierung 51c, 51d, die auch als eine gemeinsame Funktion aufgefaßt werden können, beeinflußt die Kontrastveränderung 52c. Da die Kontrastangleichung individuell für einzelne Regionen erfolgt, die jeweils gerastert bearbeitet werden, wird aus der Regionenzuordnung 51c, 51d die entsprechende Regioneninformation bereitgestellt.

Aus Figur 4 ist ersichtlich, daß die Kontrastangleichung 52c vor der geometrischen Entzerrung 53 liegt, gleichwohl wäre es denkbar und möglich, die Kontrastangleichung auch nach der Entzerrung 53 durchzuführen, in der zuvor eingehend beschriebenen Art und Weise.
(a) DGZfP, Deutsche Gesellschaft für zerstörungsfreie Prüfung, Verfahren für die optische Formerfassung, Handbuch OF1, DGZfP-Ausschuß Optische Formerfassung, 1995. (b) Chantler, Why illuminant direction is fundamental to texture analysis, IEE Proc.-Vis. Image Signal Processing, Vol. 142, No. 4, August 1995. (c) Haralick, Shanmugam, Dinstein, Textural Features for Image Classification, IEEE Trans. Systems Man Cyber., Vol. SMC-3, No. 6, pp. 610-621, Nov. 1973. (d) Unser, Sum and Difference Histograms for Texture Analysis, IEEE Trans. on Pattern Analysis and Machine Intelligence, Vol. 8, pp. 118-125, 1986. (e) Galloway, Texture Analysis Using Grey Level Run Lengths, Computer Graphics and Image Processing, Vol. 4, pp.172-179, 1975. (f) Zamperoni, Methoden der digitalen Bildsignalverarbeitung, Vieweg & Sohn, Braunschweig, 1989. (g) Peter Lang, Image Rectification for Texture Analysis of Freeform Surfaces without Analytic Surface Description, 3D Image Analysis and Synthesis, Erlangen, November 1997; ders. Combining Intensity Images and Depth Maps for Visual Surface Inspection, 10th IMDSP Workshop, 12. bis 16. Juli 1998, Alpbach, Austria; ders. Parametrisierungsfreie Entzerrung von gekrümmten Oberflächen zur automatischen visuellen Inspektion, 6. ABW-Workshop 3D-Bildverarbeitung, Technische Akademie Esslingen, 25. bis 26. Januar 1999.

## Patentansprüche

1. **Verfahren** zur Vorbereitung einer automatischen, berührungslosen und zerstörungsfreien Prüfung von nicht senkrecht zu einer optischen Achse (100) ausgerichteten Oberflächen (1,2,3,4;1*,3*) eines zu prüfenden Gegenstands als Prüfobjekt mittels zumindest einer Sensoranordnung (A,B;A,B1;Aᵢ) zur Gewinnung
(i) einer photometrischen Information einer ersten Oberfläche (3), und
(ii) einer dazu korrespondierenden geometrischen Information dieser ersten Oberfläche (3) an dem zu prüfenden Gegenstand (20),
aus einer ersten Relativposition von Sensoranordnung (A,B;A,B1;Aᵢ) und zu prüfendem Gegenstand (20) bzw. Prüfobjekt.

2. Verfahren nach Anspruch 1, bei dem eine Aufnahme des Gegenstandes durch mehrere, aufeinanderfolgende Einzelmessungen von photometrischer und geometrischer Information erfolgt, wobei zwischen den Einzelmessungen eine Relativbewegung zwischen dem zu prüfendem Gegenstand (20) und der zumindest einen Sensoranordnung erfolgt.

3. Verfahren nach Anspruch 1 oder 2, mit einer Erfassung des Gegenstandes an zumindest einer weiteren Seite (3*,1*), die aus der mit der ersten Relativposition vorgegebenen Ansicht nicht erfassbar ist.

4. Verfahren nach einem der voran stehenden Ansprüche, bei dem zumindest eine weitere Relativposition des Gegenstandes (20) und des Sensors (A) von einer mechanischen Handhabungseinrichtung erzeugt und eingestellt wird, so dass zumindest eine weitere zu prüfende Oberfläche (1,2,3,4) erfasst werden kann, insbesondere auch solche, die nicht oder nicht vollständig aus der ersten Relativposition oder Lage sichtbar sind.

5. Verfahren nach Anspruch 1, bei dem die Geometrieinformation in einen festen Bezug zur photometrischen Information als Helligkeitsinformation gebracht wird.

6. Verfahren nach 1 oder 5, wobei die Geometrieinformation zur Korrektur der photometrischen Information verwendet wird (50,50b,53).

7. Verfahren nach Anspruch 1 oder 6, bei dem die Veränderung der photometrischen Information (52) durch eine sich über das ganze Bild erstreckende Helligkeitsentzerrung (52b) erfolgt.

8. Verfahren nach Anspruch 1 oder 6, bei dem die Korrektur der photometrischen Information durch mehrere lokal begrenzte (30,31,33) Kontrastentzerrungen erfolgt.

9. Verfahren nach Anspruch 6, bei dem eine zusätzliche Korrektur der photometrischen Information durch eine Farbentzerrung erfolgt (52).

10. Verfahren nach Anspruch 1, wobei die photometrische Information durch eine geometrische Entzerrung als räumliche Lageänderung oder Richtungsveränderung erfolgt (53).

11. Verfahren nach Anspruch 6, bei dem die Korrektur der photometrischen Information durch geometrische Entzerrung (53) mit Hilfe eines krümmungsadaptiven Gitternetzes erfolgt, adaptiert von einer geglätteten (50b) geometrischen Information (50).

12. Verfahren nach Anspruch 10, bei dem Punkte zur geometrischen Entzerrung mit einem krümmungsadaptiven Gitternetz aufgrund von Nachbarschaftsbeziehungen berechnet werden (53).

13. Verfahren nach Anspruch 1 oder 6, bei dem Regionen (1,2,3,4) im Bild mit Hilfe der photometrischen Information gebildet werden.

14. Verfahren nach Anspruch 1 oder 6 oder 13, bei dem Regionen in der photometrischen Information mit Hilfe der geometrischen Information gebildet werden (51a,51b,51c,51d).

15. Verfahren nach Anspruch 1 oder 6, bei dem die Informationen geometrische und photometrische Messwerte (Bilddaten) des zu prüfenden Gegenstandes sind.

16. Verfahren nach Anspruch 1, bei dem nach der Vorbereitung der Bilddaten eine Prüfung (54) durch eine Methode der Oberflächenanalyse erfolgt.

17. Verfahren nach Anspruch 5, wobei die Geometrieinformation und die photometrische Information in einem festen Bezug steht und durch eine Umrechnung zu einer pixelgenauen Deckungsgleichheit gebracht wird.

18. Verfahren nach Anspruch 1, wobei die photometrische Information ein Schwarzweiß- oder Farb-Bild der ersten Oberfläche (3) ist.

19. Verfahren nach Anspruch 1 und 5, bei dem nach der Vorbereitung der Bilddaten eine Prüfung (54) durch eine Methode der Formanalyse erfolgt.

20. Verfahren nach Anspruch 16, bei dem nach der Vorbereitung der Bilddaten eine Prüfung (54) durch eine Texturanalyse erfolgt.

21. Verfahren nach Anspruch 1 und zur Bearbeitung von Bilddaten eines automatisiert zu prüfenden Objekts (20) als Gegenstand, welcher mehrere Regionen (1,2,3,4) aufweist,
mit folgenden Verfahrensschritten
(a) Aufzeichnen von Bilddaten zumindest eines Ausschnitts des Objekts (20) oder Gegenstandes über zumindest eine erste optische Sensoranordnung (A,B;B1,A), wobei zumindest eine der Regionen (3) des Prüfobjektes zumindest eine nicht ausgerichtete Oberfläche besitzt, deren Erstreckung nicht im wesentlichen senkrecht zu einer optischen Achse (100) der Sensoranordnung ausgerichtet verläuft;
(b) Durchführen einer lokalen Filterung der Bilddaten innerhalb der einen Oberfläche der zumindest einen Region (3) in einem im wesentlichen gleichmäßigen Raster (21) durch Bildung einer Vielzahl von gegenüber der Oberfläche kleineren Rasterbereichen (30,31,33) in der Oberfläche bzw. den Bilddaten der Oberfläche, wobei eine Kontrastbeeinflussung auf der Oberfläche der Region (3) so erfolgt, dass
- zwei Referenzparameter als ein erster maximaler und ein erster minimaler Kontrastwert (gₘₐₓᵣ, gₘᵢₙᵣ) für die Rasterbereiche der Oberfläche gleich bleiben;
- in jedem einzelnen der Rasterbereiche (30,31,33) der Oberfläche mehrere Kontrastwerte vorliegen und gesondert ein zweiter maximaler und ein zweiter minimaler Kontrastwert (gₘₐₓ₃₀, gₘᵢₙ₃₀) aus den Kontrastwerten eines Rasterbereiches (30) für diesen Rasterbereich bestimmt wird;
- ein Verstärkungsfaktor (f₃₀) aus den vier vorgenannten Kontrastwerten für den Rasterbereich (30) errechnet wird, aus dem die zweiten Kontrastwerte stammen und mit diesem Faktor die mehreren Kontrastwerte (Helligkeitswerte) dieses Rasterbereichs (30) beeinflusst werden;
zur entzerrenden Bearbeitung der Bilddaten der nicht ausgerichteten Oberfläche und Vorbereitung für eine Bearbeitung mit einer Methode der Oberflächenanalyse.

22. Verfahren nach Anspruch 21, wobei eine Helligkeitskorrektur vor oder nach der Kontrastbeeinflussung über die gesamten Bilddaten des im Bild abgebildeten Ausschnitts des Prüfobjektes (20) erfolgt, unabhängig von den Regionen (1,2,3,4) des Prüfobjektes und unabhängig von der lokalen Filterung der Oberfläche mit den einzelnen Rasterbereichen (30,31,33).

23. Verfahren nach Anspruch 21, wobei zumindest eine Oberfläche des Prüfobjektes (20)
(i) in sich gekrümmt verläuft oder mehrere Oberflächen zusammen eine dreidimensionale Begrenzung eines Abschnitts des zu prüfenden Objektes darstellen;
oder
(ii) eine plane oder ebene Oberfläche aufweist, die nicht im wesentlichen senkrecht zur optischen Achse (100) der Sensoranordnung ausgerichtet ist.

24. Verfahren nach Anspruch 1, zur Bearbeitung von Bilddaten eines Bildes von einem automatisiert zu prüfenden Objekt als Prüfobjekt (20) bzw. als Gegenstand, welcher mehrere Regionen (1,2,3,4) aufweist, mit folgenden Verfahrensschritten
(a) Aufzeichnen von *photometrischen Bilddaten* des Prüfobjektes (20) über eine erste optische Sensoranordnung (A,B1) als ein Ausgangsbild, wobei eine der Regionen (3) des Prüfobjektes eine Oberfläche besitzt, deren Erstreckung nicht im wesentlichen senkrecht zu einer optischen Achse (100) der Sensoranordnung (A) ausgerichtet verläuft;
(b) Herstellen einer im wesentlichen gleichmäßigen Grundhelligkeit über die aufgezeichneten *photometrischen Bilddaten* des Ausgangsbildes zur Bildung eines bearbeiteten Bildes, durch eine Differenzbildung zwischen dem Ausgangsbild und einem - nach einem Tiefpassfiltern des Ausgangsbilds entstehenden - konturenschwächeren Hilfsbild;
(c) Aufzeichnen von zu den photometrischen Bilddaten korrespondierenden *geometrischen Bilddaten* der nicht im wesentlichen senkrecht zur optischen Achse ausgerichteten Oberfläche der einen Region (3);
zur Bearbeitung der Bilddaten der nicht ausgerichteten Oberfläche und Vorbereitung für eine Bearbeitung mit einem Verfahren der Oberflächenanalyse.

25. Verfahren nach Anspruch 24, mit Anwenden einer Kontrastbeeinflussung nach einem der Ansprüche 21 bis 23, zumindest in einer Region (1;1*,3,3*) des Bildes.

26. Verfahren nach Anspruch 24, mit Addition eines festen Intensitätswertes auf das und über ein als bearbeitetes Bild entstehendes Differenzbild.

27. Verfahren nach Anspruch 1 und zur Bearbeitung von Bilddaten eines Bildes eines automatisiert zu prüfenden Objekts (20) als Gegenstand, der mehrere Regionen (1,2,3,4) aufweist, umfassend folgende Verfahrensschritte
(a) Aufzeichnen von Bilddaten zumindest eines Ausschnitts des Objekts (20) über zumindest einen ersten optischen Sensor (A), wobei zumindest eine der Regionen (3) des Objektes zumindest eine nicht ausgerichtete Oberfläche besitzt, deren Erstreckung nicht im wesentlichen senkrecht zu einer optischen Achse (100) des Sensors (A) ausgerichtet verläuft;
(b) Durchführen einer lokalen Filterung der Bilddaten innerhalb der einen Oberfläche der zumindest einen Region (3) in einem im wesentlichen gleichmäßigen Raster (21) durch Bildung einer Vielzahl von gegenüber der Oberfläche kleineren Rasterbereichen (30,31,33) in der Oberfläche bzw. den Bilddaten des Bildes der Oberfläche, wobei eine Kontrastbeeinflussung auf der Oberfläche der Region (3) so erfolgt,
- dass jeweils einer (30) der Vielzahl von gegenüber der Oberfläche kleineren Rasterbereichen (30,31,33) für sich und gesondert in seinem Kontrast verändert wird (f₃₀).

28. Verfahren nach Anspruch 27, wobei für jeweils einen Rasterbereich (30) ein für ihn geltender Faktor berechnet wird (f₃₀), zur Kontrastveränderung in diesem Rasterbereich.

29. Verfahren nach Anspruch. 28, wobei die Veränderung eine Multiplikation von Bildpunkten im Rasterbereich mit dem Faktor (f₃₀) ist.

30. Verfahren nach Anspruch 28, wobei die Kontrastveränderung in einem Rasterbereich (31) nicht erfolgt, wenn ein für diesen Bereich (31) berechneter Veränderungsfaktor (f₃₁) kleiner oder im wesentlichen gleich 1 (Eins) ist.

31. Verfahren nach Anspruch 21, 24 oder 27, wobei die Kontrastveränderung im wesentlichen für jeden Rasterbereich auf der Oberfläche eigenständig erfolgt.

32. Verfahren nach Anspruch 21, wobei die *lokale Filterung* eine Vorgabe eines gleichmäßigen Rasters mit im wesentlichen gleichen Rasterflächenelementen als Rasterbereiche (30,31) auf der Oberfläche ist, ausgenommen die Randbereiche der Oberfläche.

33. Verfahren nach Anspruch 29, wobei der Faktor (f₃₀) so aufgebaut ist, daß in einem Rasterbereich mit geringem Kontrast alle dort befindlichen Bildpunkte eine Kontrasterhöhung erfahren.

34. Verfahren nach Anspruch 29, wobei der Kontrast jedes Bildpunktes in einem jeweiligen Rasterbereich (30) im wesentlichen gemäß y = f·x+a verändert wird, wobei
f der Faktor (f30) für den jeweiligen Rasterbereich (30),
y die Helligkeit nach der Bearbeitung,
x die Helligkeit vor der Bearbeitung,
a eine Konstante ist.

35. Verfahren nach Anspruch 27, wobei jeweils ein Rasterbereich (30) für sich und gesondert in seinem Kontrast hinsichtlich der den Kontrast ergebenden Bildpunkte in dem Rasterbereich (30) verändert wird.

## Claims

1. Process for preparing an automatic, contact-free and non-destructive test of surfaces (1, 2, 3, 4; 1*, 3*) not aligned vertically to an optical axis (100) of an article to be tested as a test object by means of at least one sensor arrangement (A, B; A, B1; Aᵢ) for recovering
(i) photometric information of a first surface (3), and
(ii) geometric information corresponding thereto of this first surface (3) on the article (20) to be tested,
from a first relative position of sensor arrangement (A, B; A, B1; Aᵢ) and article (20) to be tested or test object.

2. Process according to claim 1, in which recording of the article is effected by several sequential individual measurements of photometric and geometric information, wherein between the individual measurements, a relative movement is effected between the article (20) to be tested and the at least one sensor arrangement.

3. Process according to claim 1 or 2, with recording of the article on at least one further side (3*, 1*), which cannot be recorded from the view preset by the first relative position.

4. Process according to one of the preceding claims, in which at least one further relative position of the article (20) and of the sensor (A) is produced by a mechanical handling device and adjusted so that at least one further surface (1, 2, 3, 4) to be tested may be recorded, in particular also those which are not visible or not completely visible from the first relative position or location.

5. Process according to claim 1, in which the geometric information is brought into a fixed relationship with the photometric information as brightness information.

6. Process according to 1 or 5, wherein the geometric information is used (50, 50b, 53) to correct the photometric information.

7. Process according to claim 1 or 6, in which the change in photometric information (52) is effected by a brightness equalisation (52b) extending over the entire image.

8. Process according to claim 1 or 6, in which correction of the photometric information is effected by several locally defined (30, 31, 33) contrast equalisations.

9. Process according to claim 6, in which additional correction of the photometric information is effected (52) by a colour equalisation.

10. Process according to claim 1, wherein the photometric information is effected (53) by a geometric equalisation as a spatial location change or direction change.

11. Process according to claim 6, in which correction of the photometric information is effected by geometric equalisation (53) with the aid of a grid network, which can be adapted to curvature, adapted by smoothed (50b) geometric information (50).

12. Process according to claim 10, in which points for geometric equalisation using a grid network, which can be adapted to curvature, are calculated (53) on the basis of neighbourhood relationships.

13. Process according to claim 1 or 6, in which regions (1, 2, 3, 4) in the image are formed with the aid of photometric information.

14. Process according to claim 1 or 6 or 13, in which regions in the photometric information are formed (51a, 51b, 51c, 51d) with the aid of the geometric information.

15. Process according to claim 1 or 6, in which the information is geometric and photometric measured values (image data) of the article to be tested.

16. Process according to claim 1, in which, after preparation of the image data, a test (54) is effected by a method of surface analysis.

17. Process according to claim 5, wherein the geometric information and the photometric information is in a fixed relationship and is brought to pixel-precise congruent matching by a conversion.

18. Process according to claim 1, wherein the photometric information is a black-and-white or colour image of the first surface (3).

19. Process according to claim 1 and 5, in which, after preparing the image data, a test (54) is effected by a method of shape analysis.

20. Process according to claim 16, in which, after preparing the image data, a test (54) is effected by a texture analysis.

21. Process according to claim 1 and for processing image data of an object (20) to be tested automatically as an article which has several regions (1, 2, 3, 4), having the following process steps
(a) recording image data of at least one cut-out of the object (20) or article via at least one first optical sensor arrangement (A, B; B1, A), wherein at least one of the regions (3) of the test object has at least one non-aligned surface, the extension of which does not run aligned essentially vertically to an optical axis (100) of the sensor arrangement;
(b) carrying out local filtering of the image data within the one surface of the at least one region (3) in an essentially uniform grid (21) by forming a plurality of smaller grid regions (30, 31, 33) with respect to the surface in the surface or the image data of the surface, wherein contrast influence is effected on the surface of the region (3), so that
- two reference parameters as a first maximum and a first minimum contrast value (gₘₐₓᵣ, gₘᵢₙᵣ) for the grid regions of the surface remain the same;
- in each individual one of the grid regions (30, 31, 33) of the surface, several contrast values exist and separately a second maximum and a second minimum contrast value (gₘₐₓ₃₀, gₘᵢₙ₃₀) is determined from the contrast values of a grid region (30) for this grid region;
- an amplification factor (f₃₀) is calculated from the four afore-mentioned contrast values for the grid region (30), from which the second contrast values originate and using this factor, the several contrast values (brightness values) of this grid region (30) are influenced;
for equalising processing of the image data of the non-aligned surface and preparing for processing using a method of surface analysis.

22. Process according to claim 21, wherein brightness correction is effected before or after the contrast influence via the entire image data of the cut-out of the test object (20) formed in the image, independently of the regions (1, 2, 3, 4) of the test object and independently of the local filtering of the surface by the individual grid regions (30, 31, 33).

23. Process according to claim 21, wherein at least one surface of the test object (20)
(i) runs curved in itself or several surfaces together represent a three-dimensional limitation of a section of the object to be tested;
or
(ii) has a plane or flat surface, which is not aligned essentially vertically to the optical axis (100) of the sensor arrangement.

24. Process according to claim 1, for processing image data of an image of an object to be tested automatically as a test object (20) or as an article which has several regions (1, 2, 3, 4), having the following process steps
(a) recording photometric image data of the test object (20) via a first optical sensor arrangement (A, B1) as a starting image, wherein one of the regions (3) of the test object has a surface, the extension of which does not run aligned essentially vertically to an optical axis (100) of the sensor arrangement (A);
(b) producing an essentially uniform basic brightness over the recorded photometric image data of the starting image to form a processed image, by differential formation between the starting image and an auxiliary image of weaker contour - being produced after lowpass filtering of the starting image;
(c) recording geometric image data corresponding to the photometric image data of the surface not aligned essentially vertically to the optical axis of the one region (3);
for processing the image data of the non-aligned surface and preparing for processing using a process of surface analysis.

25. Process according to claim 24, with application of contrast influence according to one of claims 21 to 23, at least in one region (1; 1*, 3, 3*) of the image.

26. Process according to claim 24, with addition of a fixed intensity value to the differential image being produced as a processed image and via a differential image being produced as a processed image.

27. Process according to claim 1 and for processing image data of an image of an object (20) to be tested automatically as an article which has several regions (1, 2, 3, 4), comprising the following process steps
(a) recording image data of at least one cut-out of the object (20) via at least one first optical sensor (A), wherein at least one of the regions (3) of the object has at least one non-aligned surface, the extension of which does not run aligned essentially vertically to an optical axis (100) of the sensor (A);
(b) carrying out local filtering of the image data within the one surface of the at least one region (3) in an essentially uniform grid (21) by forming a plurality of smaller grid regions (30, 31,33) with respect to the surface in the surface or the image data of the image of the surface, wherein contrast influence is effected on the surface of the region (3), so that
- in each case one (30) of the plurality of smaller grid regions (30, 31, 33) with respect to the surface is changed (f₃₀) in itself and separately in its contrast.

28. Process according to claim 27, wherein for in each case one grid region (30), a factor valid for it is calculated (f₃₀), to change the contrast in this grid region.

29. Process according to claim 28, wherein the change is a multiplication of image points in the grid region by the factor (f₃₀).

30. Process according to claim 28, wherein the change in contrast is not effected in a grid region (31) if a change factor (f₃₁) calculated for this region (31) is smaller or essentially equal to 1 (one).

31. Process according to claim 21, 24 or 27, wherein the change in contrast is effected independently essentially for each grid region on the surface.

32. Process according to claim 21, wherein the local filtering is presetting of a uniform grid with essentially the same grid surface elements as grid regions (30, 31) on the surface, except for the edge regions of the surface.

33. Process according to claim 29, wherein the factor (f₃₀) is constructed so that in a grid region with low contrast, all image points situated there experience an increase in contrast.

34. Process according to claim 29, wherein the contrast of each image point is changed in a particular grid region (30) essentially according to y = f·x+a, wherein
f is the factor (f30) for the particular grid region (30),
y the brightness after processing,
x the brightness before processing,
a a constant.

35. Process according to claim 27, wherein in each case a grid region (30) is changed in itself and separately in its contrast with respect to the image points producing the contrast in the grid region (30).

## Revendications

1. Procédé de préparation d'un contrôle automatique, sans contact et non destructif de surfaces (1,2,3,4; 1*,3*) non orientées perpendiculairement à un axe optique (100) d'un objet à contrôler comme objet d'essai au moyen d'au moins un aménagement de capteurs (A,B;A,B1;Ai) pour obtenir
(i) une information photométrique d'une première surface (3) et
(ii) une information géométrique correspondante de cette première surface (3) sur l'objet à contrôler (20),
en partant d'une première position relative de l'aménagement de capteurs (A,B;A,B1;Ai) et de l'objet à contrôler (20) ou objet d'essai.

2. Procédé selon la revendication 1, dans lequel s'effectue un relevé de l'objet par plusieurs mesures individuelles successives des informations photométrique et géométrique, un mouvement relatif entre l'objet à contrôler (20) et le au moins un aménagement de capteurs entre les mesures individuelles.

3. Procédé selon la revendication 1 ou 2, avec une couverture de l'objet sur au moins un autre côté (3*,1*) qui ne peut être saisi à partir de la vue prédéterminée par la première position relative.

4. Procédé selon l'une quelconque des revendications précédentes, dans lequel est générée et réglée au moins une autre position relative de l'objet (20) et du capteur (A) par un dispositif de manipulation mécanique de sorte qu'au moins une autre surface à contrôler (1,2,3,4) puisse être saisie, en particulier même celles qui ne sont pas ou pas complètement visibles à partir de la première position ou situation relative.

5. Procédé selon la revendication 1, dans lequel l'information géométrique est délivrée dans un rapport fixe avec l'information photométrique comme information de luminosité.

6. Procédé selon la revendication 1 ou 5, dans lequel l'information de géométrie est utilisée pour corriger l'information photométrique (50,50b,53).

7. Procédé selon la revendication 1 ou 6, dans lequel la modification de l'information photométrique (52) s'effectue par un réglage de luminosité (52b) s'étendant sur toute l'image.

8. Procédé selon la revendication 1 ou 6, dans lequel la correction de l'information photométrique s'effectue par plusieurs réglages de contraste localement limités (30,31,33).

9. Procédé selon la revendication 6, dans lequel une correction supplémentaire de l'information photométrique se fait par un réglage de couleur (52).

10. Procédé selon la revendication 1, dans lequel l'information photométrique s'effectue par un réglage géométrique tel qu'un changement de situation spatiale ou une modification de direction (53).

11. Procédé selon la revendication 6, dans lequel la correction de l'information photométrique se fait par réglage géométrique (53) à l'aide d'un réseau de trame à courbure adaptable qui peut être ajusté par une information géométrique (50) lissée (50b).

12. Procédé selon la revendication 10, dans lequel des points pour le réglage géométrique sont calculés sur la base de rapports de proximité (53) avec un réseau de trame à courbure adaptable.

13. Procédé selon la revendication 1 ou 6, dans lequel des régions (1,2,3,4) de l'image sont formées à l'aide de l'information photométrique.

14. Procédé selon la revendication 1, 6 ou 13, dans lequel sont formées des régions de l'information photométrique à l'aide de l'information géométrique (51a,51b,51c,51d).

15. Procédé selon la revendication 1 ou 6, dans lequel les informations sont des valeurs de mesure (données d'image) géométriques et photométriques de l'objet à contrôler.

16. Procédé selon la revendication 1, dans lequel s'effectue, après la préparation des données d'image, un contrôle (54) par un procédé d'analyse de surface.

17. Procédé selon la revendication 5, dans lequel l'information de géométrie et l'information photométrique se trouvent dans un rapport fixe et sont amenées par une conversion en coïncidence au pixel près.

18. Procédé selon la revendication 1, dans lequel l'information photométrique est une image en noir et blanc ou en couleur de la première surface (3).

19. Procédé selon les revendications 1 et 5, dans lequel s'effectue, après la préparation des données d'image, un contrôle (54) par un procédé d'analyse de forme.

20. Procédé selon la revendication 16, dans lequel s'effectue, après la préparation des données d'image, un contrôle (54) par analyse de texture.

21. Procédé selon la revendication 1 pour le traitement de données d'image d'un objet à contrôler de manière automatisée (20) comme objet, qui présente plusieurs régions (1,2,3,4), avec les étapes de procédé suivantes :
(a) enregistrement de données d'image d'au moins une section de l'objet (20) via au moins un premier aménagement optique de capteurs (A,B;B1,A), dans lequel au moins une des régions (3) de l'objet d'essai possède au moins une surface non orientée dont l'extension ne s'étend pas orientée sensiblement perpendiculairement à un axe optique (100) de l'aménagement de capteurs;
(b) mise en oeuvre d'un filtrage local des données d'image au sein de la première surface de la au moins une région (3) dans une trame sensiblement uniforme (21) par formation d'une pluralité de zones de trame (30,31,33) plus petites que la surface dans la surface ou les données d'image de la surface, une influence du contraste sur la surface de la région (3) s'effectuant de sorte que
- deux paramètres de référence, sous la forme d'une première valeur de contraste maximale et d'une première valeur de contraste minimale (gₘₐₓᵣ, gₘᵢₙᵣ), restent identiques pour les zones de trame de la surface;
- dans chacune des zones de trame individuelles (30,31,33) de la surface, soient présentes plusieurs valeurs de contraste et que l'on détermine séparément une seconde valeur de contraste maximale et une seconde valeur de contraste minimale (gₘₐₓ₃₀, gₘᵢₙ₃₀) à partir des valeurs de contraste d'une zone de trame (30) pour cette zone de trame;
- un facteur d'amplification (f₃₀) soit calculé à partir des quatre valeurs de contraste précitées pour la zone de trame (30), d'où proviennent les deux valeurs de contraste et que les multiples valeurs de contraste (valeurs de luminosité) de cette zone de trame (30) soient influencées par ce facteur; pour le traitement régulateur des données d'image de la surface non orientée et la préparation pour un traitement avec un procédé d'analyse de surface.

22. Procédé selon la revendication 21, dans lequel une correction de luminosité s'effectue avant et après l'influence du contraste sur l'ensemble des données d'image de la section de l'objet d'essai (20) représentées sur l'image, indépendamment des régions (1,2,3,4) de l'objet d'essai et indépendamment du filtrage local de la surface avec les zones de trame individuelles (30,31,33).

23. Procédé selon la revendication 21, dans lequel au moins une surface de l'objet d'essai (20)
(i) s'étend de manière incurvée en soi ou dans lequel plusieurs surfaces représentent conjointement une limitation tridimensionnelle d'une section de l'objet d'essai; ou
(ii) présente une surface plane (égale) qui n'est pas orientée sensiblement perpendiculairement à l'axe optique (100) de l'aménagement de capteurs.

24. Procédé selon la revendication 1, pour le traitement de données d'une image d'un objet à contrôler de manière automatisée (20), qui présente plusieurs régions (1,2,3,4), avec les étapes de procédé suivantes :
(a) enregistrement de données d'image photométriques de l'objet d'essai (20) via un premier aménagement optique de capteurs (A,B1) sous la forme d'une image de départ, où une des régions (3) de l'objet d'essai possède une surface dont l'extension ne s'étend pas orientée sensiblement perpendiculairement à un axe optique (100) de l'aménagement de capteurs (A);
(b) production d'une luminosité de base sensiblement uniforme via les données d'image enregistrées de l'image de départ pour former une image traitée par une formation de différence entre l'image de départ et une image auxiliaire aux contours plus faibles - apparaissant après un filtrage passe-bas de l'image de départ;
(c) enregistrement des données d'image géométriques correspondant aux données d'image photométriques de la surface de la première région (3) orientée de manière sensiblement perpendiculaire à l'axe optique;
pour le traitement des données d'image de la surface non orientée et la préparation pour un traitement avec un procédé d'analyse de surface.

25. Procédé selon la revendication 24, avec application d'une influence de contraste selon l'une quelconque des revendications 21 à 23, du moins dans une région (1 ;1*,3,3*) de l'image.

26. Procédé selon la revendication 24, avec addition d'une valeur d'intensité fixe sur l'image de différence et via une image de différence produite comme image traitée.

27. Procédé selon la revendication 1 et pour le traitement de données d'une image d'un objet à contrôler de manière automatique (20) comme objet, qui présente plusieurs régions (1,2,3,4) comprenant les étapes de procédé suivantes :
(a) enregistrement de données d'image d'au moins une section de l'objet (20) via au moins un premier capteur optique (A), dans lequel au moins une des régions (3) de l'objet possède au moins une surface non orientée, dont l'extension ne s'étend sensiblement pas perpendiculairement à un axe optique (100) du capteur (A);
(b) mise en oeuvre d'un filtrage local des données d'image à l'intérieur de la une surface d'au moins une région (3) dans une trame sensiblement uniforme (21) par formation d'une pluralité de zones de trame (30,31,33) plus petites que la surface dans la surface ou les données de l'image de la surface, où une influence du contraste sur la surface de la région (3) s'effectue de sorte que
- respectivement une (30) de la pluralité de zones de trame (30,31,33) plus petites que la surface soit modifiée en soi et séparément au niveau de son contraste (f₃₀).

28. Procédé selon la revendication 27, dans lequel, pour respectivement une zone de trame (30), on calcule un facteur valant pour cette zone (f₃₀) pour modifier le contraste dans cette zone de trame.

29. Procédé selon la revendication 28, dans lequel la modification est une multiplication de points d'image dans la zone de trame par le facteur (f₃₀).

30. Procédé selon la revendication 28, dans lequel la modification de contraste dans une zone de trame (31) ne s'effectue pas lorsqu'un facteur de modification (f₃₁) calculé pour cette zone (31) est inférieur ou sensiblement égal à 1 (un).

31. Procédé selon la revendication 21, 24 ou 27, dans lequel la modification de contraste s'effectue sensiblement pour chaque zone de trame sur la surface de manière autonome.

32. Procédé selon la revendication 21, dans lequel le filtrage local est un prérequis d'une trame uniforme avec des éléments de surface de trame sensiblement identiques sous la forme de zones de trame (30,31) sur la surface, à l'exception des zones de bord de la surface.

33. Procédé selon la revendication 29, dans lequel le facteur (f₃₀) est structuré de sorte que, dans une zone de trame de faible contraste, tous les points d'image qui s'y trouvent subissant une augmentation de contraste.

34. Procédé selon la revendication 29, dans lequel le contraste de chaque point d'image est modifié dans une zone de trame respective (30) sensiblement conformément à y = f.x+a, où :
f représente le facteur (f30) pour la zone de trame respective (30),
y représente la luminosité après le traitement,
x représente la luminosité avant le traitement, et
a est une constante.

35. Procédé selon la revendication 27, dans lequel, respectivement, une zone de trame (30) en soi et séparément est modifiée dans son contraste par rapport aux points d'image créant le contraste dans la zone de trame (30).
